# EUROPEAN PATENT SPECIFICATION

(11) **EP 4 084 427 B1**
(45) Date of publication and mention of the grant of the patent: **02.10.2024**
(21) Application number: 20915552.2
(22) Date of filing: 17.11.2020
(51) Int. Cl.: H04L 67/50, H04W 4/80, H04W 4/23, H04W 12/06

(54) **SERVICE PROCESSING METHOD AND DEVICE**
DIENSTVERARBEITUNGSVERFAHREN UND -VORRICHTUNG
PROCÉDÉ ET DISPOSITIF DE TRAITEMENT DE SERVICE

(30) Priority: 21.01.2020 CN 202010072822
(43) Date of publication of application: 02.11.2022
(73) Proprietor: Huawei Technologies Co., Ltd., Shenzhen, Guangdong 518129, (CN)
(72) Inventor: MO, Lan, Shenzhen, Guangdong 518129 (CN)
(74) Representative: Körber, Martin Hans
(86) International application number: PCT/CN2020/129332
(87) International publication number: WO 2021/147491

(56) References cited:
- WO-A2-2011/103838
- CN-A- 104 506 610
- CN-A- 106 663 115
- CN-A- 107 247 600
- CN-A- 109 299 047
- US-A1- 2017 048 708
- US-A1- 2017 171 696
- US-B2- 9 729 591

## Description

(excised)

### TECHNICAL FIELD

Embodiments of this application relate to the field of electronic technologies, and in particular, to a service processing method and a device

### BACKGROUND

With development of a fifth generation (5th-Generation, 5G) communications technology and an internet of things (the internet of things, IOT) technology, an increasing quantity of devices or outdoor public facilities in the industry or field are upgraded to networked online devices, and support remote monitoring and management. Users can conveniently obtain services by using various public, home, or personal networked online devices. For example, the networked online device used by the user may include a mobile phone or a wearable device (for example, a band or smart glasses) carried by the user at any time, a vehicle-mounted device, and a smart home device (for example, a smart TV or a smart speaker).

How the user obtains continuous service experience by using various devices is a hot issue. The continuous service experience means that, after switching between different devices, the user may synchronize service content and/or a service status on a previous device to a current device. In this way, after switching to the current device, the user may further obtain service content associated with the service content on the device before the switching This improves continuous service experience of the user

US 2017/048708 A1 discloses a technique for identifying a user's mobile device based on a persistent and unified identifier that bridges mobile app to mobile web and to other web browser-compatible media

US 2017/171696 A1 discloses an audio/video playing method bridging playing devices based on the position of a wearable device

### SUMMARY

Embodiments of this application provide service processing methods according to claims 1 and 8, an electronic device according to claim 14, and a computer-readable storage medium according to claim 15, so that a unified identity can be transferred based on a connection relationship between devices, and cross-device continuous service content can be automatically provided for a user based on the unified identity This reduces user operations, and improves user experience.

To achieve the foregoing objectives, the following technical solutions are used.

In an example not falling within the subject-matter for which protection is sought, an embodiment of this application provides a service processing method, applicable to a service processing system. The service processing system includes a first device, a second device, and a service server. The method includes: The first device generates a first unified identity. The first device sends a first service request to the service server, where the first service request is used to obtain first service content of a target service, and the first service request includes the first unified identity. The service server sends the first service content to the first device. Then, the service server generates or updates, based on the first service content, historical service information corresponding to the first unified identity. In addition, the first device sends the first unified identity to the second device after establishing a short-range wireless connection to the second device. The second device sends a second service request to the service server, where the second service request is used to obtain second service content of the target service, and the second service request includes the first unified identity. The service server determines the second service content based on the historical service information corresponding to the first unified identity, where the second service content is continuous with the first service content. The service server sends the second service content to the second device.

In an example not falling within the subject-matter for which protection is sought, the first service request may further include a device identifier of the first device, and the device identifier is used to indicate an identity of a device requesting the first service content. In addition, after receiving the first unified identity from the first device, the second device may store the first unified identity.

In this example, short-range wireless connection may be established between a group of devices such as the first device and the second device used by a same user, and a unified identity may be transferred based on a short-range wireless connection between devices, so that the group of devices used by the same user can be associated by using the unified identity. Therefore, the service server may provide cross-device continuous service content for the same user based on historical service information corresponding to the unified identity, to improve cross-device continuous service experience of the user. This example does not rely on a user account, without requiring the user to perform user account login or switching. This can reduce user operations, and improve user experience.

In an example not falling within the subject-matter for which protection is sought, the service processing system further includes a third device, and the first device establishes the short-range wireless connection to the second device by using the third device. The sending, by the first device, the first unified identity to the second device includes: The first device sends the first unified identity to the third device. The third device forwards the first unified identity to the second device. After receiving the first unified identity from the first device, the third device may store the first unified identity.

That is, the first device may establish the short-range wireless connection to the second device by using a relay function of the third device, so that the first device can send information such as the first unified identity to the third device by using the relay function of the third device.

In an example not falling within the subject-matter for which protection is sought, that the first device generates a first unified identity includes: The first device generates the first unified identity after establishing a short-range wireless connection to the second device or the third device for the first time.

That is, the first device may generate the first unified identity after establishing the short-range wireless connection to the second device or the third device for the first time, to transfer the first unified identity by using the short-range wireless connection.

In an example not falling within the subject-matter for which protection is sought, In after the first device receives the first service content from the service server, the method further includes: The first device sends an event reporting request to the service server after detecting a user event corresponding to the target service, where the event reporting request includes the user event and the first unified identity. The service server updates, based on the user event, the historical service information corresponding to the first unified identity.

In this way, the service server may update, based on the user event reported by the first device, the stored historical service information corresponding to the first unified identity, so that the stored historical service information corresponding to the first unified identity matches an actual service status of the user in real time.

In an example not falling within the subject-matter for which protection is sought, after the service server receives the second service request from the second device, the method further includes: The service server determines status synchronization information based on the historical service information corresponding to the first unified identity. The service server sends the status synchronization information to the second device. The second device synchronizes a latest service status and a historical service record in the historical service information corresponding to the first unified identity to the second device based on the status synchronization information.

In this way, the second device may implement consistency between a service status and a historical service record of the second device and those of a previously used device based on the status synchronization information, so that the user obtains continuous service experience.

In an example not falling within the subject-matter for which protection is sought, after the second device receives the first unified identity from the first device, the method further includes: The second device stores the first unified identity. The second device determines to disconnect the short-range wireless connection to the first device. The second device deletes the first unified identity.

That is, after the first device disconnects the connection to the second device, the second device may delete the first unified identity generated by the first device, and no longer performs service processing based on the first unified identity.

In an example not falling within the subject-matter for which protection is sought, In the second device establishes the short-range wireless connection to the first device by using the third device, and that the second device determines to disconnect the short-range wireless connection to the first device includes: The second device receives first notification information from the third device, where the first notification information is used to indicate the first device to disconnect the connection.

That is, in a case of a relay connection, after determining that the first device disconnects the connection, the third device serving as a relay device may notify the second device of disconnection information, so that the second device deletes the first unified identity generated by the first device.

In an example not falling within the subject-matter for which protection is sought, In the service processing system further includes a fourth device, and the method further includes: The fourth device generates a second unified identity. The fourth device sends the second unified identity to the second device after establishing a short-range wireless connection to the second device.

That is, the service processing system may include a plurality of devices that generate a unified identity, and the generated unified identity may be transferred to another device having a short-range wireless connection.

In an example not falling within the subject-matter for which protection is sought, the method further includes: The second device determines, based on a deletion time and a storage time of the first unified identity and those of the second unified identity, that the first unified identity is associated with the second unified identity. The second device sends second notification information to the service server, where the second notification information is used to indicate that the first unified identity is associated with the second unified identity.

For example, when determining that a quantity of times of consistency between the deletion time and the storage time of the first unified identity and the deletion time and the storage time of the second unified identity is greater than or equal to a preset quantity of times, the second device may determine that a device that generates the first unified identity and a device that generates the second unified identity correspond to a same user, to determine that the first unified identity is associated with the second unified identity.

In an example not falling within the subject-matter for which protection is sought, the method further includes: The second device sends a deletion time and a storage time of the first unified identity and those of the second unified identity to the service server. The service server determines, based on the deletion time and the storage time of the first unified identity and those of the second unified identity, that the first unified identity is associated with the second unified identity.

For example, when determining that a quantity of times of consistency between the deletion time and the storage time of the first unified identity and the deletion time and the storage time of the second unified identity is greater than or equal to a preset quantity of times, the service server may determine that a device that generates the first unified identity and a device that generates the second unified identity correspond to a same user, to determine that the first unified identity is associated with the second unified identity.

In an example not falling within the subject-matter for which protection is sought, the service server stores historical service information corresponding to the second unified identity, and when the first unified identity is associated with the second unified identity, the method further includes: The service server updates the first unified identity and the second unified identity to a third unified identity. The service server combines the historical service information corresponding to the first unified identity and the historical service information corresponding to the second unified identity into historical service information corresponding to the third unified identity.

In this example, the service server may determine that the first unified identity and the second unified identity that are associated correspond to a same user, to combine the first unified identity and the second unified identity into the third unified identity, and combine the historical service information corresponding to the first unified identity and the historical service information corresponding to the second unified identity. Therefore, the service server may provide continuous service content for the user based on the third unified identity and the historical service information corresponding to the third unified identity.

In an example not falling within the subject-matter for which protection is sought, after the service server updates the first unified identity and the second unified identity to the third unified identity, the method further includes: The service server sends identity update information to the first device that generates the first unified identity and the fourth device that generates the second unified identity, where the identity update information includes the third unified identity. The first device updates the first unified identity to the third unified identity after receiving the identity update information. The fourth device updates the second unified identity to the third unified identity after receiving the identity update information.

That is, after the first unified identity and the second unified identity are combined into the third unified identity, the service server may notify the device that generates the first unified identity and the device that generates the second unified identity to update respective unified identities to the third unified identity.

Subsequently, when sending a service request, the first device may replace the first unified identity in the service request with the third unified identity. When sending a service request, the fourth device may replace the second unified identity in the service request with the third unified identity.

In an example not falling within the subject-matter for which protection is sought, after the first device receives the identity update information, the method further includes: The first device sends the third unified identity to the second device. After the fourth device receives the identity update information, the method may further include: The fourth device sends the third unified identity to the second device.

That is, after updating unified identities, the first device and the fourth device may transfer a unified identity obtained after the update to another device having a short-range wireless connection, so that the another device adds the unified identity obtained after the update to a service request. In this way, the service server may provide continuous service content for the user based on the unified identity obtained after the update and historical service information corresponding to the unified identity obtained after the update.

In an example not falling within the subject-matter for which protection is sought, the method further includes: The second device determines priorities separately corresponding to the first unified identity and the second unified identity. The second device sends a third service request to the service server, where the third service request is used to obtain third service content of the target service, and the third service request includes a unified identity with a higher priority in the first unified identity and the second unified identity. The service server determines the third service content based on historical service information corresponding to the unified identity with a higher priority in the first unified identity and the second unified identity. The service server sends the third service content to the second device.

For example, the second device may sort priorities of unified identities based on information such as a device type of the second device, a current scenario, or connection duration of a core device. In this solution, the second device may preferentially provide cross-device continuous service content for a user corresponding to a unified identity with a higher priority.

In an example not falling within the subject-matter for which protection is sought, the method further includes: The second device sends a fourth service request to the service server, where the fourth service request is used to obtain fourth service content of the target service, and the fourth service request includes the first unified identity and the second unified identity. Then, the service server determines priorities separately corresponding to the first unified identity and the second unified identity. The service server determines the fourth service content based on historical service information corresponding to a unified identity with a higher priority in the first unified identity and the second unified identity. The service server sends the fourth service content to the second device.

In this example, the service server may preferentially provide cross-device continuous service content for a user corresponding to the unified identity with a higher priority.

In an example not falling within the subject-matter for which protection is sought, the target service is an advertisement service.

That is, the service processing system may provide cross-device continuous service content for the user for the advertisement service, to improve continuous experience of the user for the advertisement service.

In an example not falling within the subject-matter for which protection is sought, that the second service content is continuous with the first service content includes: The first service content is the same as, continuous with, close to, or associated with the second service content, or both the first service content and the second service content are content that the user is interested in.

According to another aspect, an embodiment of this application provides a service processing method, applicable to a first device. The method includes: The first device generates a first unified identity. The first unified identity is used by the first device to request first service content of a target service from a service server, and the first service content is used to generate or update historical service information corresponding to the first unified identity. The first device sends the first unified identity to a second device after establishing a short-range wireless connection to the second device, where the first unified identity is further used by the second device to request second service content of the target service from the service server, the second service content is determined based on the historical service information corresponding to the first unified identity, and the second service content is continuous with the first service content.

In an example not falling within the subject-matter for which protection is sought, the first device may generate the first unified identity. A short-range wireless connection may be established between a group of devices used by a same user, for example, the first device and the second device, and the first unified identity may be transferred based on a short-range wireless connection between devices, so that the group of devices used by the same user can be associated by using the first unified identity. Different devices such as the first device and the second device in the group of devices may request a service based on the first unified identity, so that the service server can provide continuous service content for different devices based on the historical service information corresponding to the first unified identity. This improves continuous service experience of the user.

In a possible design, the first device establishes the short-range wireless connection to the second device by using a third device, and that the first device sends the first unified identity to a second device includes: The first device sends, to the second device, the first unified identity forwarded by the third device.

In another possible design, after the first device generates the first unified identity, the method further includes: The first device sends a first service request to the service server, where the first service request is used to obtain the first service content of the target service, and the first service request includes the first unified identity. The first device receives the first service content from the service server.

In another possible design, after the first device sends the first service request to the service server, the method further includes: The first device sends an event reporting request to the service server after detecting a user event corresponding to the target service, where the event reporting request includes the user event and the first unified identity.

In another possible design, that a first device generates a first unified identity includes: The first device generates the first unified identity after establishing a short-range wireless connection to the second device or the third device for the first time.

In another possible design, after the first device generates the first unified identity, the method further includes: The first device receives identity update information from the service server, where the identity update information includes a third unified identity. The first device updates the first unified identity to the third unified identity, where the third unified identity is generated based on the first unified identity and a second unified identity, and the second unified identity is generated by a fourth device.

In another possible design, after the first device updates the first unified identity to the third unified identity, the method further includes: The first device sends the third unified identity to the second device.

According to another aspect, an embodiment of this application provides a service processing method, applicable to a second device. The method includes: The second device receives a first unified identity from a first device after establishing a short-range wireless connection to the first device. The first unified identity is generated by the first device, the first unified identity is used by the first device to request first service content of a target service from a service server, and the first service content is used to generate or update historical service information corresponding to the first unified identity. The second device sends a second service request to the service server, where the second service request is used to obtain second service content of the target service, and the second service request includes the first unified identity. The second device receives the second service content from the service server, where the second service content is determined based on the historical service information corresponding to the first unified identity, and the second service content is continuous with the first service content.

In an example not falling within the subject-matter for which protection is sought, a short-range wireless connection may be established between a group of devices such as the first device and the second device used by a same user, and a device such as the second device in the group of devices may receive, based on the short-range wireless connection, the first unified identity generated by the first device. Therefore, the group of devices used by the same user may be associated by using the first unified identity. Different devices such as the first device and the second device in the group of devices may request a service based on the first unified identity, so that the service server can provide continuous service content for different devices based on the historical service information corresponding to the first unified identity. This improves continuous service experience of the user.

In a possible design, the second device establishes the short-range wireless connection to the first device by using a third device, and that a second device receives a first unified identity from a first device includes: The second device receives, from the first device, the first unified identity forwarded by the third device.

In another possible design, after the second device receives the second service content from the service server, the method further includes: The second device sends an event reporting request to the service server after detecting a user event corresponding to the target service, where the event reporting request includes the user event and the first unified identity.

In another possible design, after the second device sends the second service request to the service server, the method further includes: The second device receives status synchronization information from the service server, where the status synchronization information is determined based on the historical service information corresponding to the first unified identity. The second device synchronizes a latest service status and a historical service record in the historical service information corresponding to the first unified identity to the second device based on the status synchronization information.

In another possible design, after the second device receives the first unified identity from the first device, the method further includes: The second device stores the first unified identity. The second device determines to disconnect the short-range wireless connection to the first device. The second device deletes the first unified identity.

In another possible design, the second device establishes the short-range wireless connection to the first device by using the third device, and that the second device determines to disconnect the short-range wireless connection to the first device includes: The second device receives first notification information from the third device, where the first notification information is used to indicate the first device to disconnect the connection.

In an example not falling within the subject-matter for which protection is sought, the method further includes: The second device receives a second unified identity from a fourth device after establishing a short-range communication connection to the fourth device, where the second unified identity is generated by the fourth device.

In an example not falling within the subject-matter for which protection is sought, after the second device receives the second unified identity from the fourth device, the method further includes: The second device determines, based on a deletion time and a storage time of the first unified identity and those of the second unified identity, that the first unified identity is associated with the second unified identity. The second device sends second notification information to the service server, where the second notification information is used to indicate that the first unified identity is associated with the second unified identity.

In an example not falling within the subject-matter for which protection is sought, after the second device receives the second unified identity from the fourth device, the method further includes: The second device sends a deletion time and a storage time of the first unified identity and those of the second unified identity to the service server.

In an example not falling within the subject-matter for which protection is sought, after the second device receives the second unified identity from the fourth device, the method further includes: The second device determines priorities separately corresponding to the first unified identity and the second unified identity. The second device sends a third service request to the service server, where the third service request is used to obtain third service content of the target service, and the third service request includes a unified identity with a higher priority in the first unified identity and the second unified identity.

In an example not falling within the subject-matter for which protection is sought, after the second device receives the second unified identity from the fourth device, the method further includes: The second device sends a fourth service request to the service server, where the fourth service request is used to obtain fourth service content of the target service, and the fourth service request includes the first unified identity and the second unified identity. The second device receives the fourth service content from the service server, where the fourth service content is determined based on historical service information corresponding to a unified identity with a higher priority in the first unified identity and the second unified identity.

In an example not falling within the subject-matter for which protection is sought, a service processing method, can be applicable to a third device. The method includes: The third device receives a first unified identity from a first device after establishing a short-range wireless connection to the first device. The first unified identity is generated by the first device, the first unified identity is used by the first device to request first service content of a target service from a service server, and the first service content is used to generate or update historical service information corresponding to the first unified identity. The third device sends the first unified identity to a second device after establishing a short-range wireless connection to the second device. The first unified identity is used by the second device to request second service content of the target service from the service server, the second service content is determined based on the historical service information corresponding to the first unified identity, and the second service content is continuous with the first service content.

In this example, the first device and the second device used by a same user may establish a short-range wireless connection by using the third device, and the third device may forward the first unified identity generated by the first device to the second device. Therefore, the first device and the third device used by the same user may be associated by using the first unified identity. The first device and the second device may request a service based on the first unified identity, so that the service server can provide continuous service content for different devices based on the historical service information corresponding to the first unified identity. This improves continuous service experience of the user.

In an example not falling within the subject-matter for which protection is sought, after the third device receives the first unified identity from the first device, the method further includes: The third device stores the first unified identity. The third device deletes the first unified identity after disconnecting the short-range wireless connection to the first device.

In an example not falling within the subject-matter for which protection is sought, after the third device disconnects the short-range wireless connection to the first device, the method further includes: The third device sends first notification information to the second device, where the first notification information is used to indicate the first device to disconnect the connection.

In an example not falling within the subject-matter for which protection is sought, the method further includes: The third device receives a second unified identity from a fourth device after establishing a short-range wireless connection to the fourth device, where the second unified identity is generated by the fourth device. The third device sends the second unified identity to the second device after establishing the short-range wireless connection to the second device.

In an example not falling within the subject-matter for which protection is sought, an embodiment of this application provides a service processing method, applicable to a service server. The method includes: The service server receives a first service request from a first device, where the first service request is used to obtain first service content of a target service, and the first service request includes a first unified identity. The service server sends the first service content to the first device. The service server generates or updates, based on the first service content, historical service information corresponding to the first unified identity. The service server receives a second service request from a second device, where the second service request is used to obtain second service content of the target service, and the second service request includes the first unified identity. The service server determines the second service content based on the historical service information corresponding to the first unified identity, where the second service content is continuous with the first service content. The service server sends the second service content to the second device.

In this example, the service server may generate or update, based on the first service content provided for the first device, the historical service information corresponding to the first unified identity, and provide the second service content for the second device based on the historical service information corresponding to the first unified identity, so that the second service content is continuous with the first service content. In this way, the service server may provide continuous service content for different devices used by a user, to improve continuous service experience of the user.

In an example not falling within the subject-matter for which protection is sought, after the service server sends the first service content to the first device, the method further includes: The service server receives an event reporting request from the first device, where the event reporting request includes a user event corresponding to the target service and the first unified identity. The service server updates, based on the event reporting request, the historical service information corresponding to the first unified identity.

In an example not falling within the subject-matter for which protection is sought, after the service server receives the second service request from the second device, the method further includes: The service server determines status synchronization information based on the historical service information corresponding to the first unified identity. The service server sends the status synchronization information to the second device, where the status synchronization information is used to synchronize a latest service status and a historical service record in the historical service information corresponding to the first unified identity to the second device.

In an example not falling within the subject-matter for which protection is sought, the method further includes: The service server receives second notification information from the second device, where the second notification information is used to indicate that the first unified identity is associated with a second unified identity.

In an example not falling within the subject-matter for which protection is sought, the service server stores historical service information corresponding to a second unified identity, and the method further includes: The service server receives a deletion time and a storage time of the first unified identity and those of the second unified identity from the second device. The service server determines, based on the deletion time and the storage time of the first unified identity and those of the second unified identity, that the first unified identity is associated with the second unified identity.

In an example not falling within the subject-matter for which protection is sought, after the service server determines that the first unified identity is associated with the second unified identity, the method further includes: The service server updates the first unified identity and the second unified identity to a third unified identity. The service server combines the historical service information corresponding to the first unified identity and the historical service information corresponding to the second unified identity into historical service information corresponding to the third unified identity.

In an example not falling within the subject-matter for which protection is sought, after the service server updates the first unified identity and the second unified identity to the third unified identity, the method further includes: The service server sends identity update information to the first device that generates the first unified identity and a fourth device that generates the second unified identity, where the identity update information includes the third unified identity.

In an example not falling within the subject-matter for which protection is sought, the method further includes: The service server receives a third service request from the second device, where the third service request is used to obtain third service content of the target service, and the third service request includes a unified identity with a higher priority in the first unified identity and the second unified identity. The service server determines the third service content based on historical service information corresponding to the unified identity with a higher priority in the first unified identity and the second unified identity. The service server sends the third service content to the second device.

In an example not falling within the subject-matter for which protection is sought, the method further includes: The service server receives a fourth service request from the second device, where the fourth service request is used to obtain fourth service content of the target service, and the fourth service request includes the first unified identity and the second unified identity. The service server determines priorities separately corresponding to the first unified identity and the second unified identity. The service server determines the fourth service content based on historical service information corresponding to a unified identity with a higher priority in the first unified identity and the second unified identity. The service server sends the fourth service content to the second device.

In an example not falling within the subject-matter for which protection is sought, the target service is an advertisement service.

In an example not falling within the subject-matter for which protection is sought, the short-range wireless connection includes a Wi-Fi connection or a Bluetooth connection.

In an example not falling within the subject-matter for which protection is sought, that the second service content is continuous with the first service content includes: The first service content is the same as, continuous with, close to, or associated with the second service content, or both the first service content and the second service content are content that the user is interested in.

In an example not falling within the subject-matter for which protection is sought, an embodiment of this application provides a service processing apparatus. The apparatus is included in an electronic device. The apparatus has a function of implementing behavior of the electronic device in any method according to the foregoing aspects and the possible designs. The electronic device may be a first device, a second device, a third device, or a service server. The function may be implemented by hardware, or may be implemented by hardware executing corresponding software. The hardware or the software includes at least one module or unit corresponding to the function.

In an example not falling within the subject-matter for which protection is sought, an embodiment of this application provides an electronic device, including one or more processors and a memory. The memory stores code. When the code is executed by the electronic device, the electronic device is enabled to perform the service processing method performed by the electronic device in any possible design of the foregoing aspects. The electronic device may be a first device, a second device, a third device, or a service server.

In an example not falling within the subject-matter for which protection is sought, an embodiment of this application provides a computer-readable storage medium, including computer instructions. When the computer instructions are run on an electronic device, the electronic device is enabled to perform the service processing method in any possible design of the foregoing aspects. The electronic device may be a first device, a second device, a third device, or a service server.

In an example not falling within the subject-matter for which protection is sought, an embodiment of this application provides a computer program product. When the computer program product is run on a computer, the computer is enabled to perform the service processing method performed by the electronic device in any possible design of the foregoing aspects. The electronic device may be a first device, a second device, a third device, or a service server.

In an example not falling within the subject-matter for which protection is sought, an embodiment of this application provides a chip system. The chip system is applied to an electronic device. The electronic device may be a first device, a second device, a third device, or a service server. The chip system includes one or more interface circuits and one or more processors. The interface circuit and the processor are interconnected through a line. The interface circuit is configured to receive a signal from a memory of the electronic device, and send the signal to the processor. The signal includes computer instructions stored in the memory. When the processor executes the computer instructions, the electronic device is enabled to perform the service processing method in any possible design of the foregoing aspects.

In an example not falling within the subject-matter for which protection is sought, an embodiment of this application provides a service processing system. The service processing system may include a first device, a second device, and a service server. In some possible designs, the service processing system may further include a third device. The first device, the second device, the third device, and the service server may perform the service processing method in any possible design of the foregoing aspects.

For beneficial effects corresponding to the foregoing other aspects, refer to the descriptions of the beneficial effects in the method aspects. Details are not described herein again.

### BRIEF DESCRIPTION OF DRAWINGS

FIG. 1 is a schematic diagram of an architecture of a communications system according to an embodiment of this application;
FIG. 2A is a schematic diagram of a structure of a mobile phone according to an embodiment of this application;
FIG. 2B is a schematic diagram of a structure of a smart TV according to an embodiment of this application;
FIG. 3A is a schematic diagram of a structure of a wireless router according to an embodiment of this application;
FIG. 3B is a schematic diagram of a structure of a service server according to an embodiment of this application;
FIG. 4A and FIG. 4B are a flowchart of a service processing method according to an embodiment of this application;
FIG. 5(a) and FIG. 5(b) are a schematic diagram of a group of service processing scenarios according to an embodiment of this application;
FIG. 6 is a schematic diagram of another group of service processing scenarios according to an embodiment of this application;
FIG. 7(a) and FIG. 7(b) are a schematic diagram of another group of service processing scenarios according to an embodiment of this application;
FIG. 8 is a schematic diagram of another group of service processing scenarios according to an embodiment of this application;
FIG. 9 is a schematic diagram of another group of service processing scenarios according to an embodiment of this application;
FIG. 10 is a flowchart of another service processing method according to an embodiment of this application;
FIG. 11 is a flowchart of another service processing method according to an embodiment of this application;
FIG. 12 is a flowchart of another service processing method according to an embodiment of this application; and
FIG. 13 is a flowchart of another service processing method according to an embodiment of this application.

### DESCRIPTION OF EMBODIMENTS

The following describes technical solutions in embodiments of this application with reference to the accompanying drawings in embodiments of this application. In the descriptions of embodiments of this application, "/" means "or" unless otherwise specified. For example, A/B may represent A or B. In this specification, "and/or" describes only an association relationship for describing associated objects and represents that three relationships may exist. For example, A and/or B may represent the following three cases: Only A exists, both A and B exist, and only B exists. In addition, in the descriptions of embodiments of this application, "a plurality of" means two or more than two.

The following terms "first" and "second" are merely intended for a purpose of description, and shall not be understood as an indication or implication of relative importance or an implicit indication of a quantity of indicated technical features. Therefore, a feature limited by "first" or "second" may explicitly or implicitly include one or more features. In the descriptions of embodiments of this application, unless otherwise specified, "a plurality of" means two or more.

For a problem that a user obtains a continuous service across devices, a solution relying on a user account is proposed in the conventional technology. In this solution, the user may log in to a plurality of devices by using a same user account. For example, the user may log into both an electronic device 1 and an electronic device 2 by using a user account 1. When the user switches from the electronic device 1 to the electronic device 2, because both the electronic device 1 and the electronic device 2 are logged in to by using the same user account, the user may inherit and synchronize service content and a service status of the user on the electronic device 1 from and to the electronic device 2, to provide continuous service content for the user. This can improve continuous service experience of the user.

For an electronic device shared by a plurality of users, such as a vehicle-mounted device or a smart home device (for example, a smart TV, a smart speaker, or a robotic vacuum cleaner), the existing solution cannot provide continuous service content for a plurality of users based on a user account of one user. After different users switch to respective user accounts by interacting with the electronic device, the electronic device may separately provide personalized continuous service content for the different users. In this solution, the user needs to perform complex account login and switching operations, resulting in poor user experience.

For a service that does not rely on an account, for example, a service such as an advertisement, a news information stream, or a browser, the service may be generally provided without logging in to the electronic device by using the user account. Therefore, continuous service content cannot be provided between different electronic devices based on the user account.

Embodiments of this application provide a service processing method. According to the method, a first device may generate a first unified identity (identity document, ID). The first unified identity may be used to request first service content of a target service from a service server, and the first service content is used to generate or update historical service information corresponding to the first unified identity. The first device may further send the first unified identity to a second device that has a short-range communication connection to the first device. The second device may request second service content of the target service from the service server based on the first unified identity. The second service content is determined based on the historical service information corresponding to the first unified identity, and the second service content is continuous with the first service content.

In embodiments of this application, a connection relationship may be established between a group of devices such as the first device and the second device used by a same user, and a unified identity may be transferred based on a connection relationship between devices, so that the group of devices used by the same user can be associated by using the unified identity. The service server may provide cross-device continuous service content for the same user based on historical service information corresponding to the unified identity, to improve cross-device continuous service experience of the user. This solution does not rely on a user account, without requiring the user to perform user account login or switching. This can reduce user operations, and improve user experience.

The first device may directly establish the short-range communication connection to the second device, or the first device may establish the short-range communication connection to the second device by using a relay function of a third device.

For example, the first device may include a core device of the user, the second device may include a trusted device of the user, and the third device may include a trusted relay device of the user.

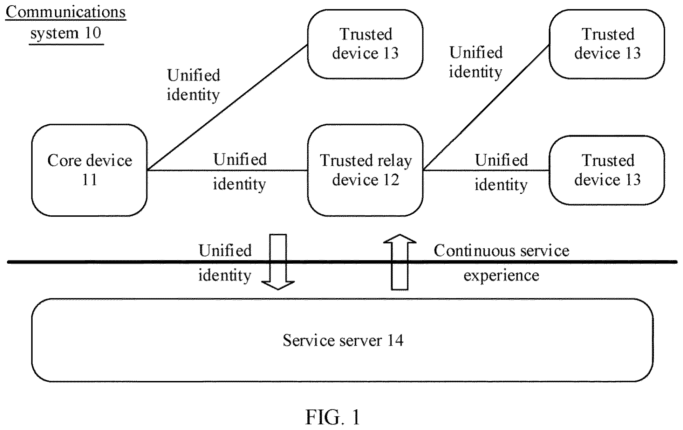

For example, as shown in FIG. 1, the service processing method provided in embodiments of this application may be applied to a communications system 10 shown in FIG. 1. The communications system 10 may include a core device 11, a trusted relay device 12, a trusted device 13, a service server 14, and the like. A trusted connection may be established between the core device 11 and the trusted device 13 in a short-range communication mode. Alternatively, trusted connections may be separately established between the core device 11 and the trusted relay device 12 and between the trusted relay device 12 and the trusted device 13 in a short-range communication mode. That is, a trusted connection may be established between the core device 11 and the trusted device 13 in a short-range communication mode based on the trusted relay device 12. The core device 11 and the trusted device 13 may perform remote communication with the service server 14, and request to obtain information such as service content from the service server 14.

For example, the short-range communication mode may be a short-range wireless communication mode such as Wi-Fi, Bluetooth (bluetooth, BT), Zigbee, an infrared (infrared, IR) technology, frequency modulation (frequency modulation, FM), a near field communication (near field communication, NFC) technology, or a universal 2.4G/5G band wireless communications technology.

For example, the relay device (for example, a wireless router) may generate a Wi-Fi local area network. After a user enters a Wi-Fi password of the Wi-Fi local area network on a core device, the core device may access the Wi-Fi network. A Wi-Fi connection between the core device and the relay device is a connection established based on an operation of entering a password by the user and the like, and therefore is a trusted connection authenticated by the user. After the trusted connection is established between the core device and the relay device, the relay device is a trusted relay device. Another device may also establish a trusted connection to the trusted relay device in this manner, and the another device that establishes the trusted connection is a trusted device of the user.

For another example, the core device is a Wi-Fi hotspot. After the user enters a Wi-Fi password of the Wi-Fi hotspot on another device, the another device may establish a Wi-Fi direct connection to the core device, or the another device may access a Wi-Fi local area network formed by the Wi-Fi hotspot. The Wi-Fi connection between the core device and the another device is a trusted connection, and the another device is a trusted device of the user.

For another example, after the user determines that Bluetooth pairing is performed between the core device and another device, a Bluetooth connection is established between the another device and the core device. The Bluetooth connection is a trusted connection, and the another device is a trusted device of the user.

For another example, the short-range communication mode may alternatively be a short-range wired communication mode. For example, the trusted relay device is a wireless router, the wireless router may establish a trusted connection to a smart TV by using a network cable, and the smart TV is a trusted device of the user. For another example, the trusted relay device is mobile Wi-Fi, the mobile Wi-Fi establishes a trusted connection to a notebook computer through a USB interface, and the notebook computer is a trusted device of the user.

The core device may also be referred to as a central device or a core terminal, and is a personal device that is carried by the user and frequently used by the user, or interacts with the service server frequently. For example, the core device may be a personal mobile device that is most frequently used by the user or a personal mobile device that interacts with the service server most frequently. The core device is not usually shared by a plurality of users. For example, the core device may be a mobile phone, a tablet computer, a wearable device (for example, a band, a smartwatch, or smart glasses), a vehicle-mounted device, a game console, a handheld computer, a notebook computer, a cellular phone, a personal digital assistant (personal digital assistant, PDA), or an augmented reality (augmented reality, AR)/virtual reality (virtual reality, VR) device. A specific form of the core device is not limited in embodiments of this application. It should be noted that the first device may be a core device, or may be another device. This is not specifically limited in embodiments of this application.

In some embodiments of this application, the core device is a device of a preset type. For example, the core device is a mobile phone. In some other embodiments, the core device is a device specified by the user. For example, the user may set a device as the core device.

The core device may automatically generate a unified identity, and transfer the unified identity to the trusted device for storage each time a connection (or referred to as a link) to the trusted device is established or a connection to the trusted device is established through the trusted relay device. For example, if the core device of the user is a mobile phone, the mobile phone may generate a unified identity, and transfer the unified identity to another trusted device such as a tablet computer, a vehicle-mounted device, a smart TV, or a wearable device based on a trusted connection.

The trusted relay device is a device that is trusted by the user and that may perform secure access and route distribution. For example, the trusted relay device may be a home gateway routing device. For example, the trusted relay device may be a wireless access device such as a wireless router or a wireless access point (access point, AP). Alternatively, the trusted relay device may be another device having a wireless access feature, for example, may be a mobile phone or a tablet computer. Alternatively, the trusted relay device may be a relay device that performs a wired connection between the core device and the trusted device. It should be noted that the third device may be a trusted relay device, or may be another device. This is not specifically limited in embodiments of this application.

The trusted relay device may connect to the core device and the trusted device over a wireless network, and perform route distribution for the core device and the trusted device, so that the core device and the trusted device access the internet. After accessing the trusted relay device, the core device may transfer the unified identity to the trusted relay device. The trusted relay device may synchronize the unified identity to the trusted device connected to the trusted relay device for storage.

The trusted device may be another device near the core device used by the user, and may also be referred to as a trusted terminal, for example, may be a tablet computer, a notebook computer, a smart home device (for example, a smart TV or a smart speaker), a vehicle-mounted device, an ultra-mobile personal computer UMPC, a personal digital assistant PDA, a wearable device (for example, a smartwatch or a smart band), an augmented reality AR/virtual reality VR device, a cellular phone, a game console, or an outdoor public facility device. After receiving the unified identity from the trusted relay device or the core device, the trusted device may store the unified identity for subsequently requesting service content. It should be noted that the second device may be a trusted device, or may be another device. This is not specifically limited in embodiments of this application.

The service server may be configured to provide service content for various devices in the internet. Different services may correspond to different service servers. For example, an advertisement service may correspond to a service server of an advertising platform. The service server of the advertising platform may deliver an advertisement in different devices over the internet based on a requirement of an advertisement delivery customer, for example, deliver an advertisement in a device such as a mobile phone, a smart TV, smart glasses, a vehicle-mounted device, or an outdoor billboard. The service server of the advertising platform may further deliver an advertisement in different applications or at different moments based on a requirement of an advertisement delivery customer, for example, deliver the advertisement as a startup advertisement, deliver the advertisement as a splash advertisement of a news app, or deliver the advertisement in a process of playing a video by a video app. Different devices in the internet may separately request to obtain advertisement content from the service server of the advertising platform.

For another example, a video service may correspond to a service server of a video. For example, HUAWEI Video may correspond to a service server of HUAWEI Video, and various devices may separately request to obtain video content from the service server of HUAWEI Video.

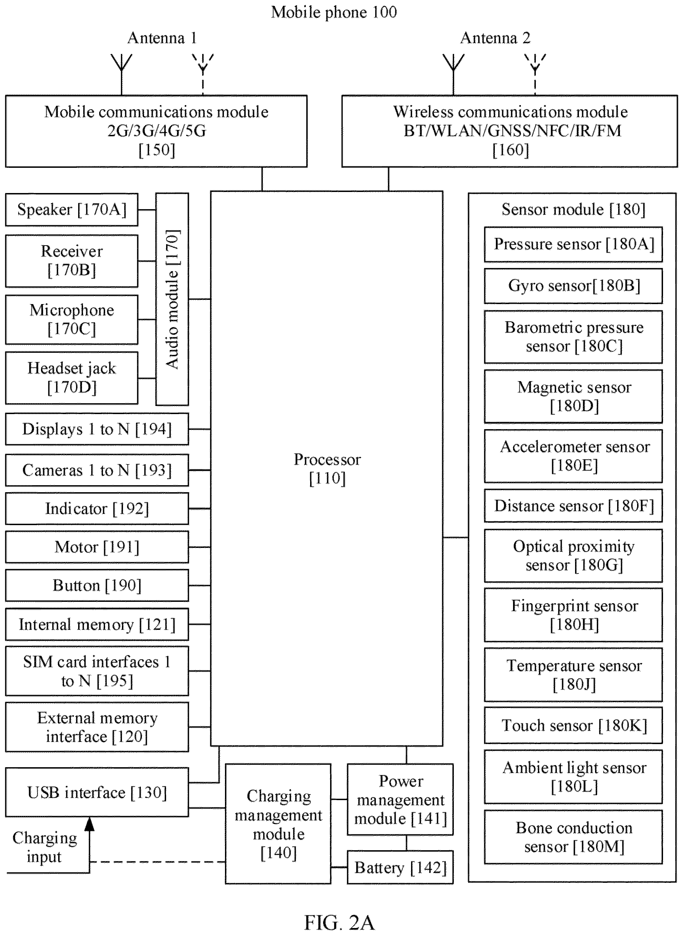

For example, when the core device is a mobile phone, FIG. 2A is a schematic diagram of a structure of a mobile phone 100. The mobile phone 100 may include components such as a processor 110, an internal memory 121, an antenna 1, an antenna 2, a mobile communications module 150, a wireless communications module 160, and a display 194.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices, or may be integrated into one or more processors. The controller may be a nerve center and a command center of the mobile phone 100. The controller may generate an operation control signal based on instruction operation code and a time sequence signal, to control instruction fetching and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access, reduces a waiting time of the processor 110, and improves system efficiency.

The internal memory 121 may be configured to store computer executable program code, where the executable program code includes instructions. The processor 110 runs the instructions stored in the internal memory 121, to perform various function applications of the mobile phone 100 and data processing. The internal memory 121 may include a program storage area and a data storage area. The program storage area may store an operating system, an application required by at least one function (for example, a sound playing function or an image playing function), and the like. The data storage area may store data (such as audio data and a phone book) and the like created during use of the mobile phone 100. In addition, the internal memory 121 may include a high-speed random access memory, or may include a nonvolatile memory, for example, at least one magnetic disk storage device, a flash memory, or a universal flash storage (universal flash storage, UFS).

A wireless communication function of the mobile phone 100 may be implemented by using the antenna 1, the antenna 2, the mobile communications module 150, the wireless communications module 160, the modem processor, the baseband processor, and the like.

The antenna 1 and the antenna 2 are configured to transmit and receive electromagnetic wave signals. Each antenna in the mobile phone 100 may be configured to cover one or more communication bands. Different antennas may be further multiplexed to improve antenna utilization. For example, the antenna 1 may be multiplexed as a diversity antenna in a wireless local area network. In some other embodiments, an antenna may be used in combination with a tuning switch.

The mobile communications module 150 may provide a solution to wireless communication that includes 2G/3G/4G/5G or the like and that is applied to the mobile phone 100. The mobile communications module 150 may include at least one filter, a switch, a power amplifier, a low noise amplifier (low noise amplifier, LNA), and the like. The mobile communications module 150 may receive an electromagnetic wave by using the antenna 1, perform processing such as filtering and amplification on the received electromagnetic wave, and transmit a processed electromagnetic wave to the modem processor for demodulation. The mobile communications module 150 may further amplify a signal modulated by the modem processor, and convert the signal into an electromagnetic wave for radiation by using the antenna 1. In some embodiments, at least some function modules of the mobile communications module 150 may be disposed in the processor 110. In some embodiments, at least some function modules of the mobile communications module 150 and at least some modules of the processor 110 may be disposed in a same device.

For example, the mobile communications module 150 may be configured to: send a service request to a service server, or obtain service content from the service server.

The wireless communications module 160 may provide a solution to wireless communication that is applied to the mobile phone 100 and that includes a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communications module 160 may be one or more devices integrating at least one communication processing module. The wireless communications module 160 receives an electromagnetic wave by using the antenna 2, performs frequency modulation and filtering processing on the electromagnetic wave signal, and sends a processed signal to the processor 110. The wireless communications module 160 may further receive a to-be-sent signal from the processor 110, perform frequency modulation and amplification on the signal, and convert the signal into an electromagnetic wave for radiation by using the antenna 2.

For example, the wireless communications module 160 may be configured to exchange information such as a unified identity, a service request, or service content.

In some embodiments, the antenna 1 and the mobile communications module 150 of the mobile phone 100 are coupled, and the antenna 2 and the wireless communications module 160 of the mobile phone 100 are coupled, so that the mobile phone 100 can communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (beidou navigation satellite system, BDS), a quasi-zenith satellite system (quasi-zenith satellite system, QZSS), and/or a satellite based augmentation system (satellite based augmentation systems, SBAS).

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a Miniled, a MicroLed, a Micro-oLed, a quantum dot light emitting diode (quantum dot light emitting diodes, QLED), or the like. In some embodiments, the mobile phone 100 may include one or N displays 194, where N is a positive integer greater than 1. For example, the display 194 may be configured to present the service content obtained from the service server to a user.

In addition, the mobile phone 100 may include an external memory interface 120, a universal serial bus (universal serial bus, USB) interface 130, a charging management module 140, a power management module 141, a battery 142, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in embodiments of this application does not constitute a specific limitation on the mobile phone 100. In some other embodiments of this application, the mobile phone 100 may include more or fewer components than those shown in the figure, or combine some components, or split some components, or have different component arrangements. The components shown in the figure may be implemented by hardware, software, or a combination of software and hardware. For example, when the mobile phone 100 is a tablet computer, the mobile phone 100 may not include components such as the mobile communications module 150 and the SIM card interface 195. For another example, when the mobile phone 100 is a smart TV, the mobile phone 100 may not include modules such as the charging management module 140, the mobile communications module 150, and the SIM card interface 195, and may further include an input device such as a speaker interface, a remote control, a mouse, or a keyboard.

In embodiments of this application, the processor 110 may generate a unified identity, and the wireless communications module 160 may send the unified identity to the trusted relay device 12 or the trusted device 13. The wireless communications module 160 or the mobile communications module 150 may send a service request to the service server 14, and the service request carries a unified identity. The wireless communications module 160 or the mobile communications module 150 may further receive service content from the service server 14. The display 194 may present the service content to a user.

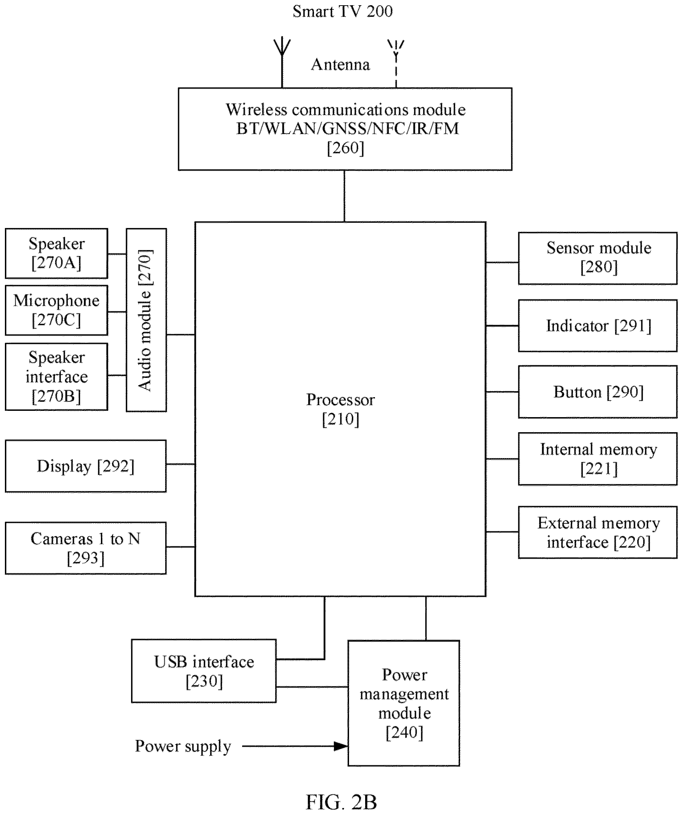

An example in which the trusted device is a smart TV is used for description. FIG. 2B is a schematic diagram of a structure of a smart TV 200. As shown in FIG. 2B, the smart TV may include a processor 210, an internal memory 221, an antenna, a wireless communications module 260, an audio module 270, a speaker 270A, a button 290, an indicator 291, a display 292, and the like.

The processor 210 may include one or more processing units. For example, the processor 210 may include an AP, a modem processor, a GPU, an ISP, a controller, a memory, a video codec, a DSP, a baseband processor, and/or an NPU. Different processing units may be independent devices, or may be integrated into one or more processors. A memory may be further disposed in the processor 210, and is configured to store instructions and data.

A wireless communication function of the smart TV may be implemented by using the antenna, the wireless communications module 260, and the like. The wireless communications module 260 may provide a solution to wireless communication that includes a WLAN (such as a Wi-Fi network), BT, a GNSS, FM, NFC, IR, and the like and that is applied to the smart TV

The wireless communications module 260 may be one or more devices integrating at least one communication processing module. The wireless communications module 260 receives an electromagnetic wave by using the antenna, performs frequency modulation and filtering processing on the electromagnetic wave signal, and sends a processed signal to the processor 210. The wireless communications module 260 may further receive a to-be-sent signal from the processor 210, perform frequency modulation and amplification on the signal, and convert the signal into an electromagnetic wave for radiation by using the antenna. In some embodiments, the antenna and the wireless communications module 260 of the smart TV are coupled, so that the smart TV can communicate with a network and another device by using a wireless communications technology. For example, in embodiments of this application, the smart TV may communicate with the relay device by using the wireless communications module 260, for example, receive a unified identity from the relay device. Certainly, the smart TV may alternatively communicate with another terminal such as the core terminal by using the wireless communications module 260.

The smart TV implements a display function by using the GPU, the display 292, the application processor, and the like. The GPU is a microprocessor for image processing, and connects the display 292 to the application processor. The GPU is configured to: perform mathematical and geometric calculation, and render an image. The processor 210 may include one or more GPUs that execute program instructions to generate or change display information.

The display 292 is configured to display an image, a video, and the like. For example, in embodiments of this application, the smart TV may display an advertisement by using the display 292. The display 292 includes a display panel. The display panel may be an LCD, an OLED, an AMOLED, an FLED, a mini-LED, a micro-LED, a micro-OLED, a QLED, or the like.

The video codec is configured to compress or decompress a digital video. The smart TV may support one or more video codecs. In this way, the smart TV may play or record videos in a plurality of coding formats, for example, MPEG1, MPEG2, MPEG3, and MPEG4.

The internal memory 221 may be configured to store computer-executable program code, and the executable program code includes instructions. The processor 210 runs the instructions stored in the internal memory 221, to perform various function applications and data processing of the smart TV The internal memory 221 may include a program storage area and a data storage area. The program storage area may store an operating system, an application required by at least one function (for example, a sound playing function or an image playing function), and the like. The data storage area may store data (for example, audio data) created in a process of using the smart TV, and the like. In addition, the internal memory 221 may include a high-speed random access memory, or may include a nonvolatile memory, for example, at least one magnetic disk storage device, a flash memory, or a UFS.

The smart TV may implement an audio function such as advertisement audio playing by using the audio module 270, the speaker 270A, the application processor, and the like. The audio module 270 is configured to convert digital audio information into an analog audio signal for output, and is also configured to convert an analog audio input into a digital audio signal. The audio module 270 may be further configured to encode and decode an audio signal. In some embodiments, the audio module 270 may be disposed in the processor 210, or some function modules in the audio module 270 are disposed in the processor 210. The speaker 270A, also referred to as a "loudspeaker", is configured to convert an audio electrical signal into a sound signal. The microphone 270C, also referred to as a "mike" or a "mic", is configured to convert a sound signal into an electrical signal.

The button 290 includes a power button, a volume button, or the like. The button 290 may be a mechanical button, or may be a touch button. The smart TV may receive a key input, and generate a key signal input related to user settings and function control of the smart TV

The indicator 291 may be an indicator light, and may be configured to indicate that the smart TV is in a power-on mode, a standby mode, a power-off mode, or the like. For example, if the indicator light is off, it may indicate that the smart TV is in the power-off mode; if the indicator light is green or blue, it may indicate that the smart TV is in the power-on mode; or if the indicator light is red, it may indicate that the smart TV is in the standby mode.

In some embodiments, as shown in FIG. 2B, the smart TV may further include: an external memory interface 220, a USB interface 230, a power management module 240, a speaker interface 270B, a microphone 270C, a sensor module 280, one to N cameras 293 (N is an integer greater than 1), and the like. The sensor module 280 may include sensors such as a distance sensor, an optical proximity sensor, a fingerprint sensor, a temperature sensor, a touch sensor, and an ambient light sensor. In some other embodiments, the smart TV may include no camera, that is, the camera 293 is not disposed in the smart TV The smart TV may be connected to an external camera 293 through an interface (for example, the USB interface 230). The external camera 293 may be fastened to the smart TV by using an external fastener (for example, a camera support with a clip). For example, the external camera 293 may be fastened to an edge such as an upper edge of the display 292 of the smart TV by using the external fastener.

It may be understood that the structure shown in embodiments does not constitute a specific limitation on the smart TV In some other embodiments, the smart TV may include more or fewer components than those shown in the figure, or combine some components, or split some components, or have different component arrangements. The components shown in the figure may be implemented by hardware, software, or a combination of software and hardware.

In addition, in embodiments, the smart TV may be further connected to a network box such as a set-top box through an interface. In this way, the smart TV may implement interaction with the service server by using the set-top box, for example, send a service request to the service server and receive service content from the service server.

In some embodiments, the smart TV may be equipped with a remote control. The remote control is used to control the smart TV The remote control may include a plurality of buttons, such as a power button, a volume button, and a plurality of other selection buttons. The button on the remote control may be a mechanical button, or may be a touch button. The remote control may receive a key input, generate a key signal input related to user settings and function control of the smart TV, and send a corresponding control signal to the smart TV, to control the smart TV For example, the remote control may send a control signal to the smart TV by using an infrared signal. The remote control may further include a battery storage cavity that is configured to mount a battery and supply power to the remote control.

In embodiments of this application, the wireless communications module 160 of the smart TV 200 may receive a unified identity from the core device 11 or the trusted relay device 12. The wireless communications module 160 or the mobile communications module 150 may send a service request to the service server 14, and the service request may carry a unified identity. The wireless communications module 160 or the mobile communications module 150 may further receive service content from the service server 14. The display 194 may present the service content to a user.

An example in which the trusted relay device is a wireless router is used for description. The wireless router has routing and wireless access functions. The wireless access function may access a network based on a first communications technology, and forward a network signal based on the first communications technology by using a second communications technology, to provide a communication signal based on the second communications technology, so that the trusted device can access the network based on the communication signal in the second communications technology. For example, the first communications technology may be an optical fiber communications technology, and the second communications technology may be a Wi-Fi communications technology. That is, the wireless router may convert an optical fiber broadband signal into a Wi-Fi signal, so that the trusted device accesses the network by using the Wi-Fi signal. For another example, the first communications technology may be a cellular mobile communications technology such as 2G/3G/4G/5G, and the second communications technology may be a Wi-Fi communications technology. That is, the wireless router may convert a cellular mobile signal into a Wi-Fi signal, so that the trusted device accesses the network by using the Wi-Fi signal.

An example in which the wireless router may convert an optical fiber broadband signal into a Wi-Fi signal, so that the trusted device accesses the network by using the Wi-Fi signal is used for description.

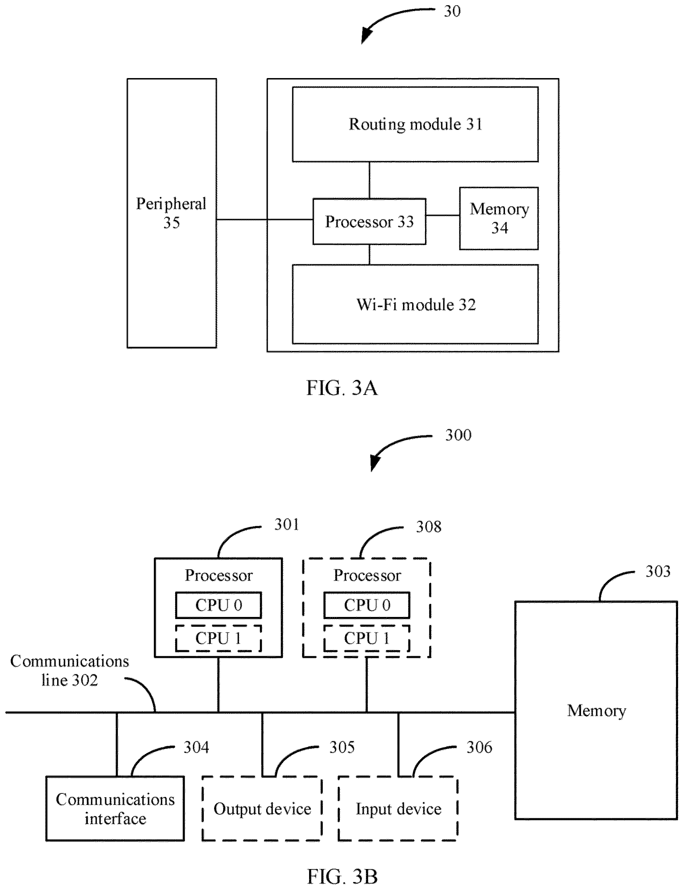

FIG. 3A is a schematic diagram of a structure of a wireless router. As shown in FIG. 3A, a wireless router 30 may include a routing module 31, a Wi-Fi module 32, a processor 33, a memory 34, a peripheral 35, and the like.

The routing module 31 may be configured to: access the internet through an Ethernet interface, and exchange an optical fiber broadband signal through the Ethernet interface, and has functions such as routing forwarding and network address translation.

The Wi-Fi module 32 may generate a Wi-Fi local area network, so that the trusted device accesses the Wi-Fi local area network to access the internet. The Wi-Fi module 32 may be configured to send and receive Wi-Fi frames. Some Wi-Fi chips may further automatically send a beacon frame, a probe response (Probe Response) frame, or the like.

The memory 34 may be configured to store computer-executable program code, and the executable program code includes instructions. The processor 33 runs the instructions stored in the memory 34, to perform various function applications and data processing of the wireless router 30. For example, the optical fiber broadband signal received by the routing module 31 is transmitted to the Wi-Fi module 32, so that the Wi-Fi module 32 sends the optical fiber broadband signal by using a Wi-Fi signal. Alternatively, the Wi-Fi signal from the Wi-Fi module 32 is transmitted to the routing module 31, so that the routing module 31 interacts with the internet by using the optical fiber broadband signal.

The peripheral may include one or more of a screen, a key (key), a sensor, a network interface, a USB interface, and the like. The screen may include a display panel.

In embodiments of this application, for the wireless router 30, after the processor 33 determines to establish a connection to the core device 11, the Wi-Fi module 32 may receive a unified identity from the core device 11, and transfer the unified identity to the trusted device 13. After determining that the processor 33 disconnects the connection (or referred to as a link) to the core device 11, the processor 33 may delete the unified identity. The Wi-Fi module 32 may notify the trusted device 13 connected to the trusted relay device 12 to delete the corresponding unified identity.

It may be understood that the structure shown in embodiments of this application does not constitute a specific limitation on the wireless router. In some other embodiments of this application, the wireless router may include more or fewer components than those shown in the figure, or combine some components, or split some components, or have different component arrangements. The components shown in the figure may be implemented by hardware, software, or a combination of software and hardware. When the trusted relay device is another device, the trusted relay device may alternatively have different components or structures.

The service server 14 may be a network element in a hardware device, or may be a software function run on dedicated hardware, or may be a virtualized function instantiated on a platform (for example, a cloud platform). The service server may be divided into one or more services. Further, a service that exists independently of a network function may occur.

For example, the service server 14 may be implemented by a communications device (which may also be referred to as a communications apparatus) of the structure shown in FIG. 3B. As shown in FIG. 3B, the communications device 300 may include a processor 301, a communications line 302, a memory 303, and at least one communications interface (FIG. 3B is merely described by using an example in which a communications interface 304 is included).

The processor 301 may be a general-purpose central processing unit (central processing unit, CPU), a microprocessor, an application-specific integrated circuit (application-specific integrated circuit, ASIC), or one or more integrated circuits configured to control program execution of the solutions in this application.

The communications line 302 may include a path for transmitting information between the foregoing components.

The communications interface 304 is applicable to any apparatus such as a transceiver, and is configured to communicate with another device or a communications network such as the Ethernet, a radio access network (radio access network, RAN), or a wireless local area network (wireless local area networks, WLAN).

The memory 303 may be a read-only memory (read-only memory, ROM) or another type of static storage device capable of storing static information and instructions, a random access memory (random access memory, RAM) or another type of dynamic storage device capable of storing information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray optical disc, and the like), a magnetic disk storage medium or another magnetic storage device, or any other medium capable of carrying or storing expected program code in a form of an instruction or a data structure and capable of being accessed by a computer, but is not limited thereto. The memory may exist independently, and is connected to the processor through the communications line 302. The memory 303 may alternatively be integrated with the processor 301.

The memory 303 is configured to store computer-executable instructions for performing the solutions in this application, and the processor 301 controls execution. The processor 301 is configured to execute the computer-executable instructions (which may also be referred to as application code) stored in the memory 303, to implement the collaborative control method provided in the following embodiments of this application.

During specific implementation, in an embodiment, the processor 301 may include one or more CPUs, for example, a CPU 0 and a CPU 1 in FIG. 3B.

During specific implementation, in an embodiment, the communications device 300 may include a plurality of processors, for example, the processor 301 and a processor 308 in FIG. 3B. Each of these processors may be a single-core processor (single-CPU), or may be a multi-core processor (multi-CPU). The processor herein may be one or more devices, circuits, and/or processing cores configured to process data (for example, computer program instructions).

During specific implementation, in an embodiment, the communications device 300 may further include an output device 305 and an input device 306. The output device 305 communicates with the processor 301, and may display information in a plurality of manners.

The communications device 300 may be a general-purpose device or a dedicated device. A specific type of the communications device 300 is not limited in embodiments of this application.

When the communications device 300 is the service server 14, the communications interface 304 may receive a service request from the core device 11 or the trusted device 13, and the service request carries a unified identity. The processor 301 may determine to-be-provided service content based on historical service information corresponding to the unified identity in the service request. The communications interface 304 may return the service content determined by the processor 301 to the core device 11 or the trusted device 13, to provide cross-device continuous service content for a user, and improve continuous service experience of the user.

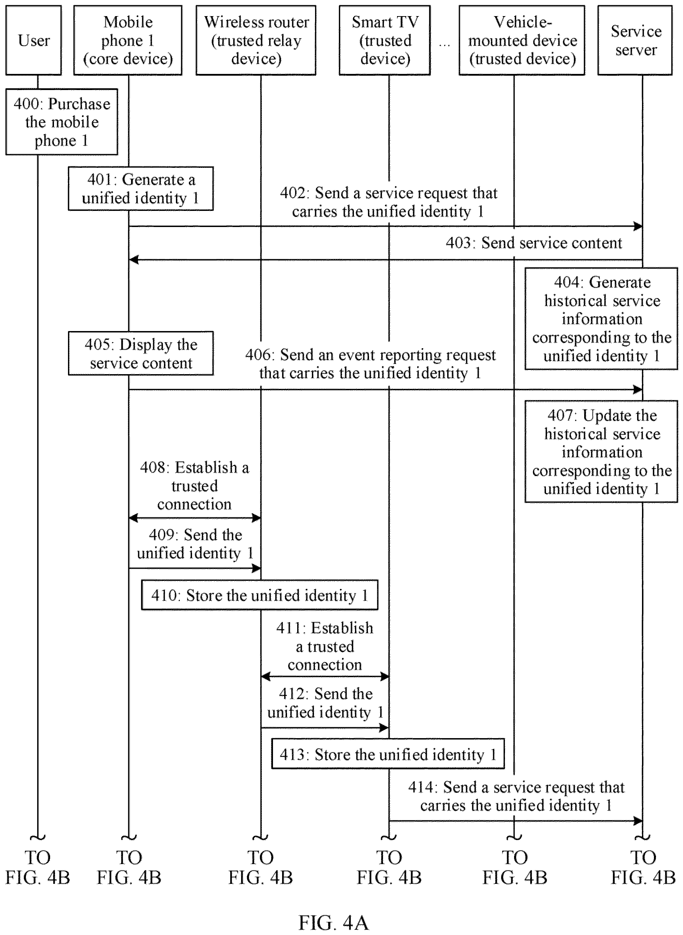

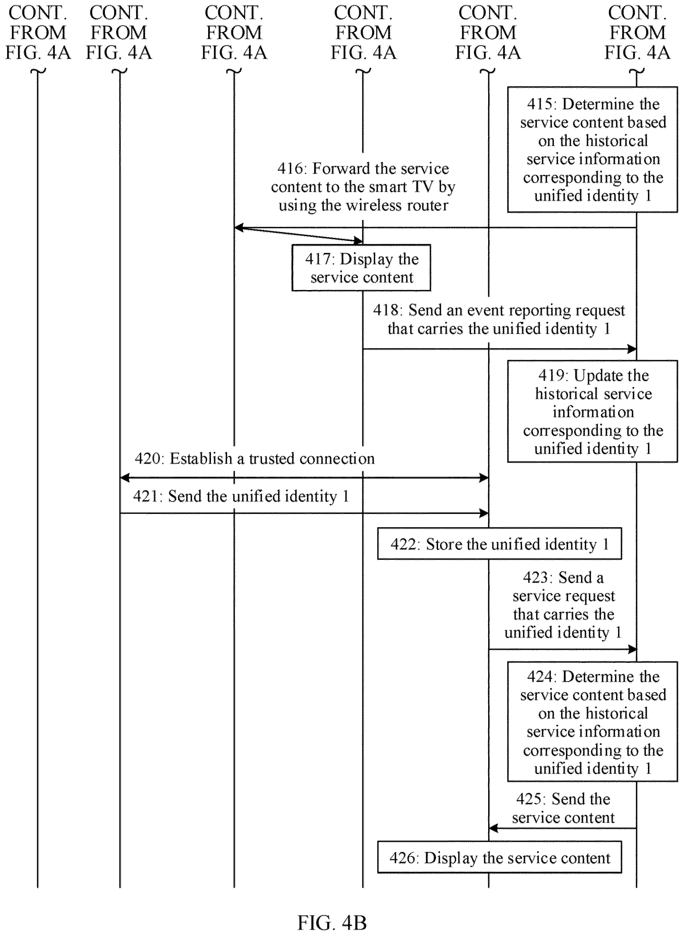

The following describes the service processing method provided in embodiments of this application by using an example in which the core device is a mobile phone 1 having the structure shown in FIG. 2A, the trusted relay device is a wireless router, and the trusted device includes a device such as a smart TV, a vehicle-mounted device, or a smartwatch. As shown in FIG. 4A and FIG. 4B, the method may include the following steps:
400: A user newly purchases the mobile phone 1.
401: The mobile phone 1 generates a unified identity 1, where the mobile phone 1 is a core device of the user.

Because the unified identity 1 is an identifier generated by a personal core device that is carried by the user and that the user heavily relies on, the unified identity 1 corresponds to the core device, and may be used to identify historical service information of the user using the core device, for example, a historical service status or a user preference of the user. For details about the historical service information, refer to the following detailed descriptions.

The unified identity 1 is a newly defined identifier, and is an identifier newly added based on the conventional technology. The unified identity 1 and an identifier in the conventional technology may exist simultaneously or independently. That is, specific content of the unified identity 1 may be an identifier different from the identifier in the conventional technology.

For example, the unified identity may be represented by using a new character string. For example, the unified identity may include a random number, or may include a prefix and a random number. The random number may be a character string of 256 bits or another length. The prefix may be a character string used to distinguish between different equipment vendors (for example, Huawei or another equipment vendor).

Alternatively, although the unified identity 1 may be a newly defined identifier, the unified identity 1 may be an identifier in the conventional technology, that is, specific content of the unified identity 1 may be an identifier in the conventional technology. The mobile phone may use the identifier in the conventional technology as the newly defined unified identity 1. For example, the unified identity 1 may be an existing device serial number of the mobile phone 1, for example, an international mobile equipment identity (international mobile equipment identity, IMEI). The unified identity 1 and the device serial number of the mobile phone 1 are two identifiers that exist simultaneously or independently. For another example, the unified identity 1 may be a media access control (media access control, MAC) address, an integrate circuit card identity (integrate circuit card identity, ICCID), or another existing identifier of the mobile phone 1.

Alternatively, the unified identity may be an identifier related to the identifier in the conventional technology. For example, the core device may generate the unified identity based on the identifier in the conventional technology. For example, the core device is a mobile phone. The mobile phone may extract some content of an existing identifier such as a device serial number (for example, an IMEI), a MAC address, an ICCID, or an OAID of the mobile phone, and use the extracted content as the unified identity. For another example, the core device is a mobile phone. The mobile phone may combine existing identifiers of the mobile phone to generate the unified identity.

For example, the unified identity 1 may be an identifier preset when the mobile phone 1 is delivered from factory. When the mobile phone 1 is powered on for the first time, the unified identity 1 may be generated based on the preset identifier. For another example, the unified identity 1 may be an identifier generated in a process of using the mobile phone 1 after the mobile phone 1 is powered on for the first time.

In some embodiments, the mobile phone 1 generates the unified identity 1 after determining that a preset condition is met. For example, the mobile phone 1 generates the unified identity 1 when determining to establish a trusted connection to another device for the first time. Specifically, the mobile phone 1 may generate the unified identity 1 in a process of establishing the trusted connection to the another device, or may generate the unified identity 1 after establishing the trusted connection to the another device.

For example, the mobile phone 1 requests to establish a Wi-Fi connection to a wireless router, and after detecting a Wi-Fi password entered by the user, the mobile phone 1 sends the Wi-Fi password to the wireless router. After verifying that the Wi-Fi password is valid, the wireless router establishes the Wi-Fi connection to the mobile phone 1. Because the Wi-Fi connection is a connection established based on a user operation such as an operation of entering a Wi-Fi password by the user, the Wi-Fi connection is a trusted connection authenticated by the user. After establishing a trusted connection to the wireless router, the mobile phone 1 may generate the unified identity 1. The unified identity 1 corresponds to the mobile phone 1, and the unified identity 1 may be used to identify the user of the mobile phone 1.

For another example, the mobile phone 1 requests to establish a Bluetooth connection to a smartwatch, the user separately performs a Bluetooth pairing operation on the mobile phone 1 and the smartwatch, and the mobile phone 1 establishes the Bluetooth connection to the smartwatch. Because the Bluetooth connection is a connection established based on a user operation such as an operation of performing pairing by the user, the Bluetooth connection is a trusted connection authenticated by the user. After establishing a trusted connection to the smartwatch, the mobile phone 1 may generate the unified identity 1. The unified identity 1 corresponds to the mobile phone 1, and the unified identity 1 may be used to identify the user of the mobile phone 1.

In some other embodiments, the mobile phone 1 generates the unified identity 1 after determining that the mobile phone 1 is used by one user for a period of time. After purchasing the mobile phone 1, the user may not use the mobile phone 1, but gives the mobile phone 1 to another user for use. Therefore, the newly purchased mobile phone 1 may not generate the unified identity 1 temporarily. After determining, based on a preset algorithm model and a use characteristic such as a use habit, a use mode, or a use frequency of the user, that the mobile phone 1 is used by one user for a period of time, the mobile phone 1 may generate the unified identity 1 used to identify the user.

In some other embodiments, the mobile phone 1 may generate the unified identity 1 according to an indication of the user. For example, the user may indicate, in a setting menu of the mobile phone 1, to generate the unified identity 1.

The unified identity 1 may be used by a group of devices trusted by the user, such as the mobile phone 1, a trusted device connected to the mobile phone 1, and a trusted device connected to the mobile phone 1 by using a wireless router, to request to obtain service content of a target service from a service server of the target service.

When the user uses the mobile phone 1, the mobile phone 1 may send a service request to the service server, to request to obtain the service content of the target service. As shown in FIG. 4A and FIG. 4B, the method may further include the following steps.

402: The mobile phone 1 sends the service request to the service server, to request to obtain the service content of the target service, where the service request carries the unified identity 1.

The target service to which the service request is specific may be a service that does not rely on an account, or may be a service associated with a user account. A type of the target service is not limited in embodiments of this application. For example, the target service may be the service that does not rely on an account, such as an advertisement service, a news service, or a browser service. When sending the service request to the service server, the mobile phone 1 may add the unified identity 1, so that the service server performs related service statistics collection and other processing based on the unified identity 1.

In addition, the service request may further carry a device identifier (for example, a device serial number of the mobile phone 1) of the mobile phone 1, and the device identifier is used to indicate an identity of a device that sends a service request to the service server.

For example, the target service is an advertisement service, and the mobile phone 1 may display a splash advertisement when opening an application app. The mobile phone 1 may push an advertisement to the user when the user browses news by using a news app. The mobile phone 1 may push an advertisement to the user when the user browses a web page by using a browser, and the mobile phone 1 may first push an advertisement to the user when starting to play a video, or the mobile phone 1 may insert an advertisement in a process of playing a video.

The mobile phone 1 may send an advertisement service request to the service server. In addition to the unified identity 1, the advertisement service request may further include one or more of the following information: an identifier of an application app, an advertisement slot ID, an open advertising ID (open advertising ID, OAID), and the like. In this way, the service server returns the service content based on the information, to perform advertisement delivery in a corresponding application app, a corresponding advertisement slot, or a corresponding advertisement device.

For example, after detecting an operation of indicating to open the news app by the user, the mobile phone 1 may send the service request to the service server, to obtain brief information of an advertisement pushed to the user in the news app, and display the brief information of the advertisement in the news app. After detecting an operation of tapping the brief information by the user, the mobile phone 1 may send the service request to the service server, to obtain detailed advertisement service content. For another example, after detecting an operation of indicating to open the application app by the user, the mobile phone 1 may send a service request to a service server of an advertisement, to obtain service content of a splash advertisement. For another example, after detecting an operation of indicating to open the browser by the user, the mobile phone 1 may send a service request to a service server of an advertisement, to obtain service content of an advertisement pushed to the user in the browser.

For another example, the target service is HUAWEI Video, and the mobile phone 1 may send the service request to the service server, to request to obtain video content of HUAWEI Video.

403: The service server sends the service content of the target service to the mobile phone 1.

The unified identity 1 is an identifier generated by the newly purchased mobile phone 1, and the mobile phone 1 has not previously sent the unified identity 1 to the service server. Therefore, the service server has not previously received a service request that is sent by another device and that carries the unified identity 1, and the service server has not generated historical service information of the target service corresponding to the unified identity 1, and does not need to ensure service continuity based on the historical service information. The service server may send the service content of the target service to the mobile phone 1 based on the device identifier of the mobile phone 1 in the service request.

The historical service information is used to describe a history of using the service by the user. The historical service information may include information such as a historical service status and/or a user preference of the user. The historical service status of the user may include information such as latest (that is, previous) service content (for example, for an advertisement service, latest advertisement content is a car or an appliance), a latest service status, and a historical service record.

The latest service status may include one or more of the following: a subservice/subfunction used by the user most recently (for example, for a HUAWEI Video service, whether a movie subservice or a short video subservice is used most recently), a latest service login status of the user (for example, whether a user account is used for login most recently), a latest service progress (for example, a progress of playing a video most recently), or the like. The user preference includes information such as a behavior habit, an object of interest, and a use preference of the user for the service.

It should be noted that, if the mobile phone 1 is not a newly purchased mobile phone, but an old mobile phone that is used by the user for a long time, the service server may have generated the historical service information of the target service corresponding to the unified identity 1 of the mobile phone 1. The service server may determine the service content of the target service based on the historical service information corresponding to the unified identity 1, to implement cross-device continuous service content of the user, and improve continuous service experience of the user. For a process in which the service server determines the service content based on the historical service information corresponding to the unified identity 1, to implement cross-device continuous service experience of the user, refer to related descriptions in step 415.

404: The service server generates, based on the service content, the historical service information corresponding to the unified identity 1.

After receiving the service request sent by the mobile phone 1, the service server corresponding to the target service determines that the service request carrying the unified identity 1 is received for the first time, and therefore may generate, based on the service content provided for the mobile phone 1 in step 403, the historical service information of the target service corresponding to the unified identity 1, that is, generate the historical service information of the target service corresponding to the user marked by the unified identity 1.

The service server may generate, based on the service content provided for the mobile phone 1, the historical service status of the user in the historical service information corresponding to the unified identity 1 (for example, generate the "latest service content" in the historical service status of the user).

It should be noted that, if the mobile phone 1 is a used mobile phone that is used by the user for a long time, before step 402 and step 403, the service server may have generated the historical service information corresponding to the unified identity 1. After step 402 and step 403, the service server may update, based on the service content provided in step 403, the historical service information corresponding to the unified identity 1.

405: The mobile phone 1 displays the service content of the target service.

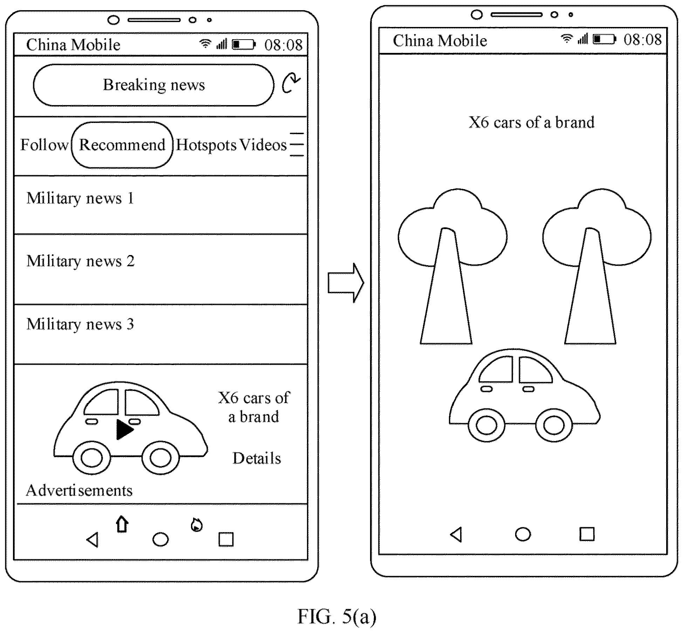

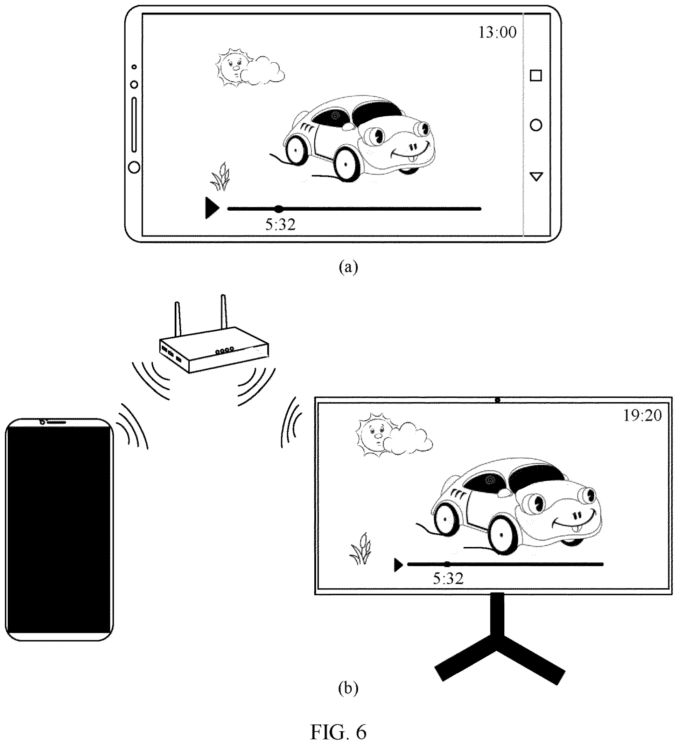

After receiving the service content sent by the service server, the mobile phone 1 may display the service content. For example, the target service is an advertisement service. As shown in FIG. 5(a), brief information of the advertisement that is obtained by the mobile phone 1 from the service server and displayed by the mobile phone 1 may be brief information of X6 of a brand. For another example, the target service is a video service. For video content obtained by the mobile phone 1 from the service server and displayed by the mobile phone 1, refer to (a) in FIG. 6.

After the mobile phone 1 displays the service content, if the user is interested in the service content, the user may spend a long time browsing the service content, or may perform a related operation such as tap or download on the service content. As shown in FIG. 4A and FIG. 4B, the method may further include the following steps.

406: The mobile phone 1 sends an event reporting request to the service server after detecting a user event corresponding to the target service, where the event reporting request includes the user event and the unified identity 1.

For example, the target service is an advertisement service, and the user event may include an exposure event for advertisement service content displayed by the mobile phone 1 (that is, display duration of the advertisement service content exceeds preset duration), a user tap event, a download event, or an advertisement video play event. For example, if the mobile phone 1 displays brief information of an advertisement in the news app, and the mobile phone 1 detects an operation of tapping the brief information by the user, to request to watch detailed advertisement service content or play an advertisement video, the mobile phone 1 may report a tap event or an advertisement video play event to the service server. For another example, if the mobile phone 1 detects an operation of tapping to watch a splash advertisement by the user, to request to watch link content of the splash advertisement, the mobile phone 1 may report a tap event to the service server.

For another example, the target service is an advertisement service, and the user event may further include an exposure event that is detected by the mobile phone 1 and in which the user browses an advertisement by using a device such as an outdoor billboard. For example, the outdoor billboard plays an advertisement 1, and broadcasts a wireless signal. The wireless signal includes an identifier of the advertisement 1 that is being played by the billboard and orientation information of the billboard, and the orientation information is used to indicate a location and an orientation of the billboard. After receiving the wireless signal, the mobile phone 1 determines, based on the orientation information in the wireless signal, a location and a movement direction of the mobile phone 1, and preset exposure duration, that the advertisement 1 played by the billboard generates an effective exposure event for the user of the mobile phone 1.

For another example, the target service is a video play service, and the user event may include a pause/play event, an exit event, or a fast-forward/rewind event.

In addition, the user event may further include a plurality of other events related to an operation or a status of the user, for example, an event in which the user enters a user account and a password, an event in which the user opens a service application, an event in which the user exits a service application, or a Save to Favorites event of the user. No enumeration is provided herein. The mobile phone 1 may report the detected user event to the service server by using the event reporting request.

In addition, the mobile phone 1 may further add the unified identity 1 to the event reporting request, so that the service server performs related service statistics collection and other processing based on the unified identity 1. In addition, the event reporting request may further carry one or more of the following information: an identifier of an application app, an advertisement slot ID, an OAID, or the like.

407: The service server updates, based on the user event, the historical service information corresponding to the unified identity 1.

The service server may update, based on the user event or other information reported by the mobile phone 1, the historical service information corresponding to the unified identity 1, that is, update the historical service information of the user marked by the unified identity 1.

For example, the service server may update, based on the user event, information such as the "latest service status" or the "user preference" in the historical service information of the target service corresponding to the unified identity 1.

The following illustrates a process in which the service server generates, based on the service content, the historical service information corresponding to the unified identity 1, and updates, based on the user event or other information, the historical service information corresponding to the unified identity 1.

For example, the target service is an advertisement service, and a service server of an advertisement provides advertisement content of X6 cars of a brand for the mobile phone 1 in step 403. In step 404, the service server generates the historical service information corresponding to the unified identity 1, and determines that the latest service content of the user includes playing an advertisement for X6 cars of a brand. If the service server receives the event reporting request that carries a tap event and an exposure event of the unified identity 1 in step 406, the service server updates the historical service information in step 407, and records the user preference including that the user is interested in the current advertisement.

Alternatively, for a splash advertisement, a service server of an advertisement provides advertisement content of X6 cars of a brand for the mobile phone 1 in step 403. In step 404, the service server generates the historical service information corresponding to the unified identity 1, and determines that latest service content of the user includes playing an advertisement for X6 cars of a brand. If the mobile phone 1 does not detect, when playing the advertisement content of X6 cars of specific brand, an operation of indicating to skip the advertisement by the user, or the mobile phone 1 detects that the user taps the splash advertisement to request to watch link content of the splash advertisement, the mobile phone 1 may report a tap event or an exposure event to the service server. After receiving the user event reported by the mobile phone 1 in step 406, the service server updates the historical service information corresponding to the unified identity 1, and records the user preference including that the user is interested in the current advertisement.

For another example, the target service is a HUAWEI Video service, and a service server of HUAWEI Video determines, based on information such as the service content and/or the user event corresponding to the mobile phone 1, that in the historical service information corresponding to the unified identity 1, the latest service status of the user includes playing a video 1 to 5:32 (that is, 5 minutes 32 seconds), the latest service login status of the user is that a user account has been used to log in to a HUAWEI Video application, and the user preference includes that the user is used to skipping intro credits and prefers military videos.

For another example, the target service is an e-book service, and a service server of an e-book reader determines, based on information such as the service content and/or the user event corresponding to the mobile phone 1, that in the historical service information corresponding to the unified identity 1, the latest service status of the user includes browsing a bibliography 1 to page 3, and the user preference includes that the user prefers historical books.

In some embodiments, the service server may store a first correspondence between the unified identity 1 and the historical service information. For example, for the first correspondence, refer to Table 1.

**Table 1**

| Unified identity | Historical service information |
|---|---|
| Unified identity 1 | Play an advertisement for X6 cars of a brand... |

In some other embodiments, the service server may store a first correspondence among the unified identity 1, a user 1 marked by the unified identity 1, and the historical service information. For example, for the first correspondence, refer to Table 2.

**Table 2**

| Unified identity | User | Historical service information |
|---|---|---|
| Unified identity 1 | User 1 | Play an advertisement for X6 cars of a brand... |

In embodiments of this application, after being powered on, the mobile phone 1 may establish a trusted connection to the relay device, to establish a trusted connection to another device by using the relay device. As shown in FIG. 4A and FIG. 4B, the method may further include the following steps.

408: The mobile phone 1 establishes a trusted connection to a wireless router, where the wireless router is a trusted relay device.

The mobile phone 1 may establish the trusted connection to the wireless router, and the trusted connection is a connection authenticated by the user and established based on an operation such as an indication of the user. The wireless router that establishes a communication connection to the mobile phone 1 based on the trusted connection is a trusted relay device.

The mobile phone 1 used as the core device is usually a device carried by the user, and for ease of use and in consideration of security, the trusted relay device and the trusted device used by the user are also usually near the user, that is, the trusted relay device and the trusted device are also usually near the mobile phone 1. Therefore, a trusted connection may be established between the core device and the trusted relay device in a short-range communication mode.

For example, the trusted connection may be a Wi-Fi connection or a Bluetooth connection. It may be understood that the trusted connection may alternatively be a short-range communication connection such as an infrared connection or an NFC connection. A specific type of the trusted connection is not limited in embodiments of this application.

After the mobile phone 1 establishes the trusted connection to the wireless router, the mobile phone 1 may subsequently automatically access, based on the trusted connection, a wireless local area network generated by the wireless router, to automatically establish a wireless connection to the wireless router.

409: The mobile phone 1 sends the unified identity 1 to the wireless router.

The mobile phone 1 may send the generated unified identity 1 to the wireless router, to transfer the unified identity 1 of the user to the trusted relay device of the user based on the trusted connection. That is, the mobile phone 1 may transfer, based on a topology connection relationship, the unified identity 1 to another device trusted by the user.

In some cases, if the mobile phone 1 has generated the unified identity 1 after establishing the trusted connection to the wireless router, the mobile phone 1 may send the generated unified identity 1 to the wireless router. In some other cases, if the mobile phone 1 has not generated the unified identity 1 after establishing the trusted connection to the wireless router, the mobile phone 1 may first generate the unified identity 1, and then send the generated unified identity 1 to the wireless router.

In some other embodiments, the mobile phone 1 may not send the unified identity 1 after establishing the trusted connection to the wireless router, but sends the unified identity 1 to the wireless router in a process of establishing the trusted connection described in step 408.

410: The wireless router stores the unified identity 1.

After receiving the unified identity 1 sent by the mobile phone 1, the wireless router stores the unified identity 1.

411: The smart TV establishes a trusted connection to the wireless router, where the smart TV is a trusted device.

The smart TV may establish the trusted connection to the wireless router, and the trusted connection is a connection authenticated by the user and established based on an operation such as an indication of the user. A device connected to the wireless router based on the trusted connection is a trusted device. After the trusted connection is established between the smart TV and the wireless router, a trusted connection is also indirectly established between the smart TV and the core device. For example, the trusted connection may be a Wi-Fi connection or a Bluetooth connection. It may be understood that the trusted connection may alternatively be a short-range connection mode such as an infrared connection, an NFC connection, a USB interface, or a network cable connection. This is not limited in embodiments of this application.

Subsequently, the smart TV may automatically access, based on the trusted connection, a wireless local area network generated by the wireless router, to automatically establish a wireless connection to the wireless router.

It may be understood that the smart TV is merely an example. Another device may also establish a trusted connection to the wireless router, to serve as the trusted device of the user. For example, another smart home device such as a tablet computer, a notebook computer, or a smart speaker may also establish a trusted connection to the wireless router, to indirectly establish a trusted connection to the mobile phone 1 used as the core device.

412: The wireless router sends the unified identity 1 to the smart TV

After establishing the trusted connection to the smart TV, the wireless router may send the unified identity 1 to the smart TV, to transfer the unified identity 1 of the user to the trusted device of the user.

That is, the unified identity 1 generated by the core device of the user may be automatically transferred to the trusted relay device and the trusted device connected to the trusted relay device of the user based on the topology connection relationship. In this way, the unified identity 1 generated by the core device of the user is associated with a group of devices trusted by the user.

In some other embodiments, the wireless router is provided with a network cable interface, and the smart TV may establish the trusted connection to the smart TV through the network cable interface inserted into the wireless router by using a network cable. The wireless router may send the unified identity 1 to the smart TV by using the network cable based on the trusted connection.

413: The smart TV stores the unified identity 1.

When the user uses the smart TV, the smart TV may request the service content from the service server, and display the service content to the user. As shown in FIG. 4A and FIG. 4B, the method may further include the following steps.

414: The smart TV sends a service request to the service server, to request to obtain the service content of the target service, where the service request carries the unified identity 1.

The service request sent by the smart TV to the service server may carry the unified identity 1, so that the service server provides the service content of the target service based on the unified identity 1. For example, the target service is an advertisement service. The smart TV may display a splash advertisement when being powered on, or may display an advertisement on a home page after being powered on, or may display a splash advertisement when opening an application app, and insert an advertisement when starting to play a video, or insert an advertisement in a process of playing a video.

In addition, the service request may further include a device identifier of the smart TV, so that the service server learns of an identity of a device that requests the service content.

415: The service server determines the service content based on the historical service information corresponding to the unified identity 1, and updates the historical service information based on the determined service content.

The service server may determine, based on the historical service information corresponding to the unified identity 1, the current service content of the target service that is provided for the smart TV, so that the service content provided by the service server for the smart TV is continuous with service content for a previous device. For example, the service server may determine, according to the stored Table 1, the current service content provided for the smart TV

The service server may further synchronize, to the smart TV based on the historical service information corresponding to the unified identity 1, information such as a historical service record of the user marked by the unified identity 1, a subservice used by the user most recently, a latest service login status of the user, or a latest service progress of the user. Therefore, the service server may enable the historical service information corresponding to the smart TV to be continuous with the historical service information corresponding to the previous device. That is, the smart TV may inherit and synchronize from and to historical service information on a device previously used by the user, to provide cross-device continuous service content for the user, and improve continuous service experience of the user.

The continuous historical service information may include continuous service content, continuous used subservices, continuous service login statuses, continuous historical service records, or the like. The continuous service content may include that different pieces of service content on different devices are the same, continuous, similar, or associated, or the different pieces of service content are all content that the user is interested in.

In some other embodiments, when the service server stores a correspondence between the unified identity 1 and the user, the service server may find the associated user 1 based on the unified identity 1, and provide the service content for the smart TV based on historical service information of a device previously used by the user 1, to provide continuous personalized service content for the user 1. For example, the service server may determine, according to the stored Table 2, the current service content provided for the smart TV

After determining the service content based on the historical service information, the service server further updates the historical service information based on the determined service content, so that the historical service information stored in the service server corresponds to a service status of the user in real time.

It may be understood that, if the trusted relay device is a device that can process the target service, such as a tablet computer or a notebook computer, the trusted relay device is also a trusted device in embodiments of this application. Similar to the trusted device, the trusted relay device may also send a service request to the service server, to request to obtain the service content of the target service, and add the unified identity 1 to the service request. Details are not described herein.

416: The service server forwards the service content to the smart TV by using the wireless router.

The service server may send the determined service content to the smart TV by using the wireless router based on the device identifier of the smart TV in the service request.

417: After receiving the service content forwarded by the service server by using the wireless router, the smart TV displays the service content.

Optionally, step 416 may further include: The service server forwards status synchronization information to the smart TV by using the wireless router.

The status synchronization information is used to indicate information such as a latest service status or a historical service record in the historical service information corresponding to the unified identity 1. That is, the service server may forward the service content determined based on the historical service information and the status synchronization information to the smart TV by using the wireless router.

Step 417 may further include: The smart TV synchronizes, based on the status synchronization information, the latest service status and the historical service record of the target service in the historical service information to the smart TV locally.

In this way, the smart TV may implement continuity of the service content of the target service based on the service content determined based on the historical service information, and implement consistency between a service status and a historical service record of the smart TV and those of the previously used mobile phone 1 based on the status synchronization information, so that the user obtains continuous service experience.

The following illustrates a scenario of implementing cross-device service continuity.

For example, the target service is an advertisement service. The service server determines, based on the historical service information of the user corresponding to the unified identity 1, that an advertisement for X6 cars of a brand is played (for example, by using the mobile phone 1) for the user previously, and that the user is interested in the advertisement. After the mobile phone 1 is connected to the smart TV by using the wireless router, the service server determines, based on the historical service information, that advertisement service content provided for the smart TV is still the advertisement for X6 cars of a brand that the user is interested in, so that the historical service information of the smart TV corresponding to the unified identity 1 is continuous with that of the mobile phone 1, that is, historical service information of the user marked by the unified identity 1 on one device is continuous with that on another device. That is, when the user uses the mobile phone 1, the mobile phone 1 displays an advertisement for X6 of a brand for the user. After the mobile phone 1 is connected to the smart TV by using the wireless router, the smart TV continues to display the advertisement for X6 of a brand for the user.

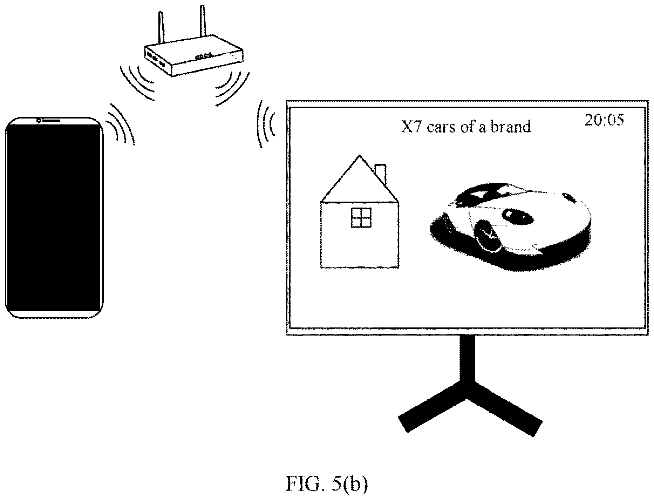

Alternatively, the service server determines, based on the historical service information of the user corresponding to the unified identity 1, that an advertisement for X6 cars of a brand is played for the user previously, and that the user is interested in the advertisement. After the mobile phone 1 is connected to the smart TV by using the wireless router, the service server determines, based on the historical service information, that advertisement service content provided for the smart TV is an advertisement for X7 cars of a brand related to X6 of a brand. For example, as shown in FIG. 5(a), when the user browses news in a news app at 8:08 a.m. by using the mobile phone 1, the mobile phone 1 displays an advertisement for X6 of a brand for the user. As shown in FIG. 5(b), after the user goes home at 20:05 p.m., the mobile phone 1 is connected to the smart TV by using the wireless router, and the smart TV displays a splash advertisement for X7 cars of a brand for the user.

Alternatively, the service server determines, based on the historical service information of the user corresponding to the unified identity 1, that an advertisement for X6 cars of a brand in a summer scenario is played for the user previously. After the mobile phone 1 is connected to the smart TV by using the wireless router, the service server determines, based on the historical service information, that advertisement service content provided for the smart TV is an advertisement for X6 cars of a brand in a winter scenario.

Alternatively, the service server determines, based on the historical service information of the user corresponding to the unified identity 1, that an advertisement for X6 cars of a brand is played for the user previously, and that the user preference includes that the user prefers cars. After the mobile phone 1 is connected to the smart TV by using the wireless router, the service server determines, based on the historical service information, that advertisement service content provided for the smart TV is still an advertisement for cars, but an advertisement for cars of another brand.

In this way, the service server may enable the historical service information of the smart TV corresponding to the unified identity 1 is continuous with that of the mobile phone 1, that is, historical service information of the user marked by the unified identity 1 on one device is continuous with that on another device.

For another example, the target service is a HUAWEI Video service. The service server determines, based on the historical service information of the user corresponding to the unified identity 1, that the user previously watches a video 1 to 5:32 by using HUAWEI Video (for example, by using HUAWEI Video of the mobile phone 1), and that the user has logged in to HUAWEI Video by using a user account. After the mobile phone 1 is connected to the smart TV by using the wireless router, the service server provides content starting from 5:32 of the video 1 for the smart TV by using HUAWEI Video based on the historical service information, and synchronizes a historical play record and a login status of the user account to the smart TV, so that the historical service information of the smart TV corresponding to the unified identity 1 is continuous with that of the mobile phone 1, that is, historical service information of the user marked by the unified identity 1 on one device is continuous with that on another device.

That is, when the user uses the mobile phone 1, the mobile phone 1 plays the video 1 to 5:32 for the user. After the mobile phone 1 is connected to the smart TV by using the wireless router, the smart TV synchronizes the historical play record of the user on HUAWEI Video and the login status of the user account that has been used to log in to HUAWEI Video. In some embodiments, after the smart TV starts HUAWEI Video, if the user indicates to play the video 1, the smart TV directly starts playing the video from 5:32 of the video 1. In some other embodiments, after starting HUAWEI Video, the smart TV may prompt the user whether to continue playing the previous unfinished video. If the smart TV detects an operation of indicating to directly play the video by the user, the smart TV may start playing the video from 5:32 of the video 1. In some other embodiments, if the user does not exit the video 1 when watching the video 1 on the mobile phone 1 previously, the service server may further record a state in which the user does not exit the video 1 in the historical service information, and synchronize the state to the smart TV After starting HUAWEI Video, the smart TV displays the content of the video 1 at 5:32 for the user based on the state, to directly play the video 1 for the user from this location.

For example, as shown in (a) in FIG. 6, when the user uses the mobile phone 1 at 13:00 p.m., the mobile phone 1 plays the video 1 to 5:32 for the user. Then, the user stops playing the video 1. After the user goes home at 19:20 p.m., as shown in (b) in FIG. 6, the mobile phone 1 is connected to the smart TV by using the wireless router, and the smart TV displays the content of the video 1 at 5:32 for the user, so that the video 1 continues to be played for the user from a location at which the user stops playing the video.

It may be understood that the smart TV is merely an example of a trusted device, and the trusted device may alternatively be another device than the smart TV

For example, the target service is a browser service, and the trusted device is a notebook computer. A service server of a browser determines, based on the historical service information of the user corresponding to the unified identity 1, that the user browses (for example, by using the mobile phone 1) content of a web page 1 previously by using a browser. After the mobile phone 1 is connected to the notebook computer by using the wireless router, the service server continues to provide the content of the web page 1 for the smart TV based on the historical service information by using a browser, and provides a historical browsing record (that is, a historical service record) for the notebook computer, so that the historical service information of the notebook computer corresponding to the unified identity 1 is continuous with that of the mobile phone 1, that is, historical service information of the user marked by the unified identity 1 on one device is continuous with that on another device. That is, when the user uses the mobile phone 1, the mobile phone 1 displays the content of the web page 1 for the user. After the mobile phone 1 is connected to the notebook computer by using the wireless router, the notebook computer may continue to display the content of the web page 1 for the user by using the browser.

For example, the user browses the web page 1 at 14:00 by using a browser of the mobile phone 1. The mobile phone 1 is connected to the notebook computer by using the wireless router. When the user browses the web page at 14:05 by using the browser of the tablet computer, the tablet computer may continue to display the content of the web page 1 for the user. In addition, web pages previously saved by the user to favorites by using other devices are synchronized to the tablet computer.

For another example, the target service is a news service, and the trusted device is a tablet computer. A service server of a news application determines, based on the historical service information corresponding to the user identity 1, that the user preference includes that the user prefers browsing military news. After the mobile phone 1 is connected to the tablet computer by using the wireless router, the service server continues to preferentially recommend military news for the user based on the historical service information by using a news application of the tablet computer, and may further synchronize news messages previously saved by the user to favorites to the tablet computer, so that the historical service information of the tablet computer corresponding to the unified identity 1 is continuous with that of the mobile phone 1, that is, historical service information of the user marked by the unified identity 1 on one device is continuous with that on another device.

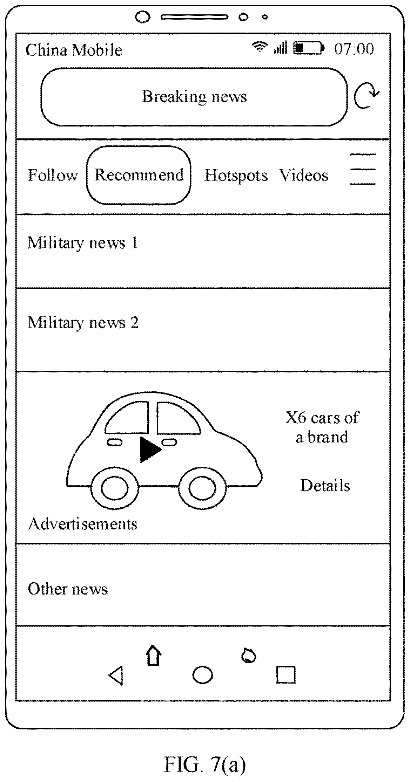

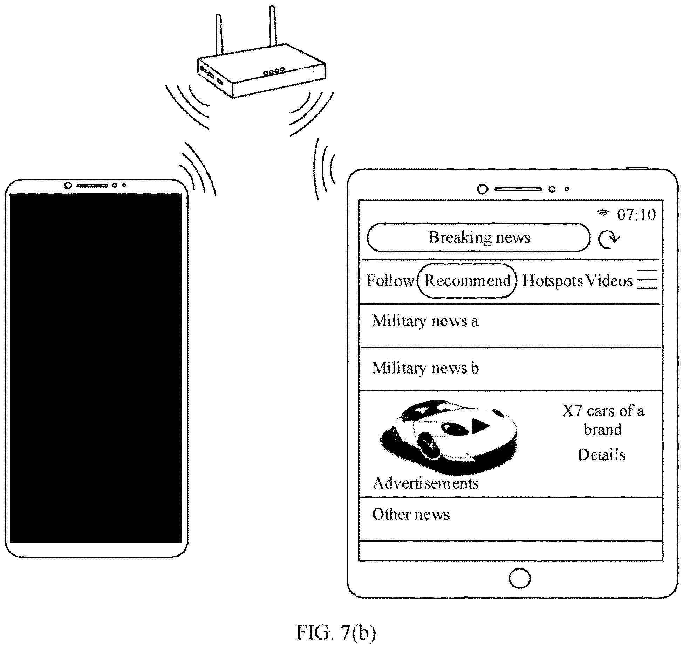

For example, as shown in FIG. 7(a), when the user uses a news app of the mobile phone 1 to browse news at 7:00, the mobile phone 1 preferentially recommends military news for the user. As shown in FIG. 7(b), the mobile phone 1 is connected to the tablet computer by using the wireless router, and when the user browses news at 7: 10 by using the news app of the tablet computer, the tablet computer continues to preferentially recommend military news for the user, and news messages previously saved by the user to favorites by using other devices are synchronized to the tablet computer.

For another example, the target service is an e-book service, and the trusted device is a tablet computer. A service server of an e-book reader determines, based on the historical service information of the user corresponding to the unified identity 1, that the user reads (for example, by using the mobile phone 1) page 3 of a bibliography 1 previously by using the e-book reader. After the mobile phone 1 is connected to the tablet computer by using the wireless router, the service server provides a reading progress of page 3 of the bibliography 1 for the tablet computer based on the historical service information, so that the historical service information of the tablet computer corresponding to the unified identity 1 is continuous with that of the mobile phone 1, that is, historical service information of the user marked by the unified identity 1 on one device is continuous with that on another device.

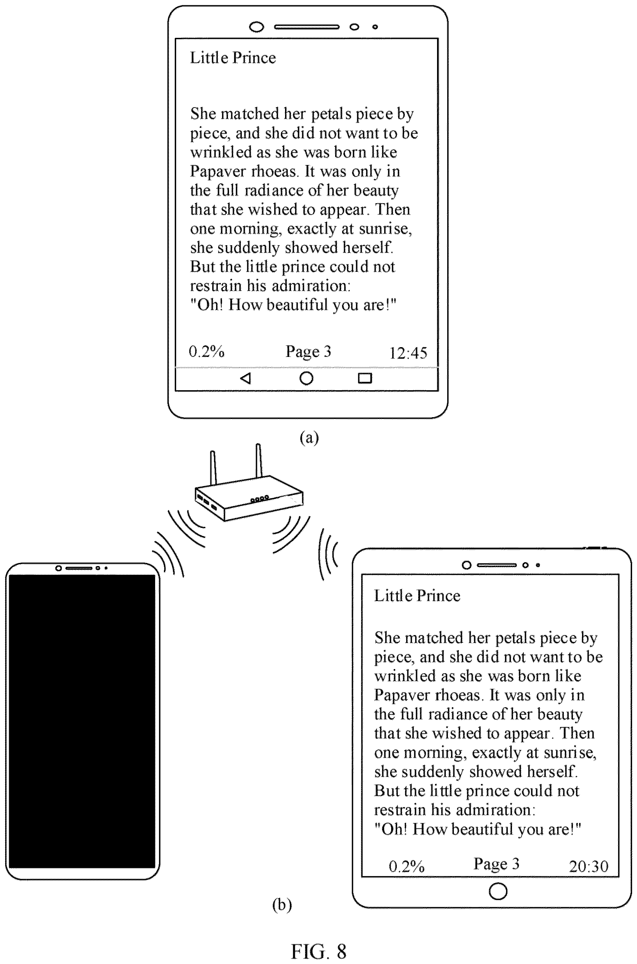

For example, as shown in (a) in FIG. 8, the user reads page 3 of the bibliography 1 at 12:45 by using an e-book reader of the mobile phone 1. After the mobile phone 1 is connected to the tablet computer by using the wireless router, as shown in (b) in FIG. 8, the tablet computer displays content on page 3 of the bibliography 1 by using the e-book reader, and the user may continue to read subsequent content of the bibliography 1 from the previous reading progress on the mobile phone 1.

For another example, the target service is a WeChat service, and the trusted device is a tablet computer. A service server of WeChat determines, based on the historical service information of the user corresponding to the unified identity 1, that a subservice previously used by the user is Discover of WeChat. After the mobile phone 1 is connected to the tablet computer by using the wireless router, the service server provides service content of the subservice of Discover for the tablet computer based on the historical service information. In this way, the tablet computer displays an interface of Discover for the user, so that the historical service information of the tablet computer corresponding to the unified identity 1 is continuous with that of the mobile phone 1, that is, historical service information of the user marked by the unified identity 1 on one device is continuous with that on another device.

Then, the trusted device such as the smart TV, the tablet computer, or the notebook computer may further report a detected user event corresponding to the target service to the service server, so that the service server updates, based on the user event, the historical service information corresponding to the unified identity 1.

418: The smart TV sends an event reporting request to the service server after detecting a user event corresponding to the target service, where the event reporting request includes the user event and the unified identity 1.

419: The service server updates, based on the user event, the historical service information corresponding to the unified identity 1.

The service server may obtain the user event and other information, and update the historical service information corresponding to the unified identity 1, that is, update the historical service information of the user marked by the unified identity 1, so that the historical service information corresponding to the unified identity 1 that is stored by the service server matches an actual service status of the user in real time.

For example, after the service server updates the historical service information corresponding to the unified identity 1, the first correspondence shown in Table 1 may be updated to that in Table 3.

**Table 3**

| Unified identity | Historical service information |
|---|---|
| Unified identity 1 | Play an advertisement for X7 cars of a brand... |

For another example, after the service server updates the historical service information corresponding to the unified identity 1, the first correspondence shown in Table 2 may be updated to that in Table 4.

**Table 4**

| Unified identity | User | Historical service information |
|---|---|---|
| Unified identity 1 | User 1 | Play an advertisement for X7 cars of a brand... |

It can be learned from the foregoing descriptions that, in the solutions described in embodiments of this application, the core device of the user may generate a unified identity, and transfer the unified identity to a surrounding trusted device based on a trusted connection, to identify a same user across devices by using the unified identity. Both the core device and the trusted device add the unified identity when requesting the service content. The service server provides continuous service content and continuous service statuses for different devices based on a same unified identity. In this way, when the user requests services by using different devices, service content and a service status of the user on another device can be automatically synchronized to a current device. After the user switches to a different device, original user experience can be maintained. That is, according to the service processing method provided in embodiments of this application, cross-device continuous service experience of a same user marked by a same unified identity can be implemented.

After being powered on, the mobile phone 1 may directly establish a trusted connection to another device without using the trusted relay device. As shown in FIG. 4A and FIG. 4B, the method may further include the following steps.

420: The mobile phone 1 establishes a trusted connection to the vehicle-mounted device, where the vehicle-mounted device is a trusted device.

When the user approaches to a vehicle with the mobile phone 1, the mobile phone 1 may establish the trusted connection to the vehicle-mounted device, and the trusted connection is a connection authenticated by the user and established based on an operation such as an indication of the user. The trusted connection is usually a connection established in a short-range communication mode. For example, the trusted connection may be a Wi-Fi direct connection or a Bluetooth connection. A vehicle-mounted device connected to the mobile phone 1 based on the trusted connection is a trusted device.

The mobile phone 1 used as the core device is usually a device carried by the user, and the trusted device used by the user is also usually near the user, that is, the trusted device is also near the mobile phone 1. Therefore, a trusted connection is usually established between the core device and the trusted device in a short-range communication mode.

Subsequently, the vehicle-mounted device may automatically establish a wireless connection to the mobile phone 1 based on the trusted connection.

It may be understood that the vehicle-mounted device is merely an example, and another device such as a smartwatch may directly establish a trusted connection to the mobile phone 1 without using the trusted relay device. The another device such as the smartwatch that establishes the trusted connection to the mobile phone 1 is a trusted device.

421: The mobile phone 1 sends the unified identity 1 to the vehicle-mounted device.

The mobile phone 1 may send the generated unified identity 1 to the vehicle-mounted device, to transfer the unified identity 1 of the user to the trusted relay device of the user based on the trusted connection. That is, the mobile phone 1 may transfer, based on the topology connection relationship, the unified identity 1 to another device trusted by the user.

In some cases, if the mobile phone 1 has generated the unified identity 1 after establishing the trusted connection to the vehicle-mounted device, the mobile phone 1 may send the generated unified identity 1 to the vehicle-mounted device. In some other cases, if the mobile phone 1 has not generated the unified identity 1 after establishing the trusted connection to the vehicle-mounted device, the mobile phone 1 may first generate the unified identity 1, and then send the generated unified identity 1 to the vehicle-mounted device.

422: The vehicle-mounted device stores the unified identity 1.

After receiving the unified identity 1 sent by the mobile phone 1, the vehicle-mounted device may store the unified identity 1.

Based on the descriptions of the foregoing embodiment, as shown in Table 5, the unified identity may be associated with a plurality of devices such as the mobile phone 1, the wireless router, the smart TV, the smart speaker, the smartwatch, and the vehicle-mounted device.

**Table 5**

| Device name | Device identifier | Unified identity |
|---|---|---|
| Mobile phone 1 (core device) | 011462101875396 | Unified identity 1 |
| Wireless router (trusted relay device) | 10411500638 | |
| Smart TV (trusted device) | D85C4A68D3C6 | |
| Smart speaker (trusted device) | 10049294576 | |
| Vehicle-mounted device (trusted device) | 10531601003 | |
| Smartwatch (trusted device) | D31D8B20C117 | |
| ... | ... | |

423: The vehicle-mounted device sends a service request to the service server, to request to obtain the service content of the target service, where the service request carries the unified identity 1.

The service request may further include a device identifier of the vehicle-mounted device, so that the service server learns of an identity of a device that requests the service content.

424: The service server determines the service content based on the historical service information corresponding to the unified identity 1.

The service server determines, based on the historical service information corresponding to the unified identity, the current service content of the target service that is provided for the vehicle-mounted device, so that the historical service information corresponding to the vehicle-mounted device is continuous with historical service information corresponding to a previous device.

425: The service server sends the service content to the vehicle-mounted device.

426: The vehicle-mounted device displays the service content.

Optionally, step 425 may further include: The service server sends status synchronization information to the vehicle-mounted device.

The status synchronization information is used to indicate information such as a latest service status or a historical service record in the historical service information corresponding to the unified identity 1. That is, the service server may send the service content determined based on the historical service information and the status synchronization information to the vehicle-mounted device.

Step 426 may further include: The vehicle-mounted device synchronizes, based on the status synchronization information, the latest service status and the historical service record of the target service in the historical service information to the vehicle-mounted device locally.

In this way, the vehicle-mounted device may implement continuity of the service content of the target service based on the service content determined based on the historical service information, and implement consistency between a service status and a historical service record of the vehicle-mounted device and those of a previously used device based on the status synchronization information, so that the user obtains continuous service experience.

For example, the target service is a HUAWEI Music service, and the trusted device is a vehicle-mounted device (or a device such as a smartwatch). A service server of a music application determines, based on the historical service information of the user corresponding to the unified identity 1, that the user plays (for example, by using the mobile phone 1 or the smart TV) music 1 to 1:30 previously by using HUAWEI Music. After the mobile phone 1 is connected to the vehicle-mounted device, the service server provides content of the music 1 and a previous play progress of the music 1 for the vehicle-mounted device based on the historical service information, so that the historical service information of the notebook computer corresponding to the unified identity 1 is continuous with that of the mobile phone 1, that is, historical service information of the user marked by the unified identity 1 on one device is continuous with that on another device.

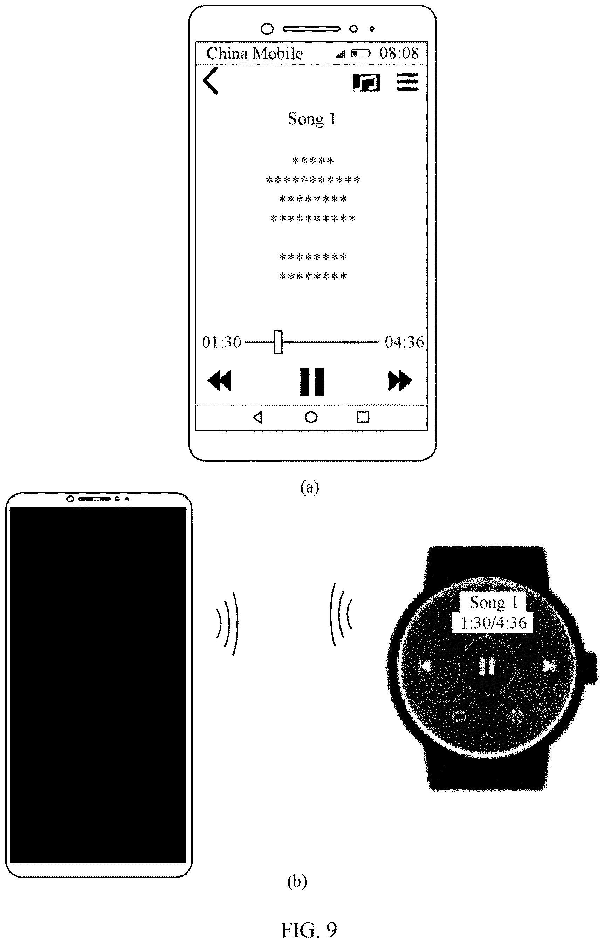

For example, as shown in (a) in FIG. 9, the user uses the mobile phone 1 to play music 1 to 1:30. Then, the user stops playing music. As shown in (b) in FIG. 9, after the mobile phone 1 is connected to the smartwatch through Bluetooth, the smartwatch continues to play music 1 from 1:30.

Subsequently, if the user leaves with the mobile phone 1 used as the core device, the mobile phone 1 automatically disconnects the wireless connection to the wireless router used as the trusted relay device. After detecting that the mobile phone 1 disconnects the connection, the wireless router deletes the unified identity 1. The wireless router notifies the connected trusted device that the mobile phone 1 disconnects the connection. After receiving the notification, the trusted device deletes the stored unified identity 1. If the user leaves with the mobile phone 1, the communication connection between the mobile phone 1 and the trusted device such as the vehicle-mounted device is also automatically disconnected. After detecting that the mobile phone 1 disconnects the connection, the vehicle-mounted device may delete the stored unified identity 1. Alternatively, after the mobile phone 1 disconnects the connection, the wireless router, the smart TV, and the vehicle-mounted device may not delete the unified identity 1, but sets the unified identity 1 to invalid and records a corresponding state as an off state.

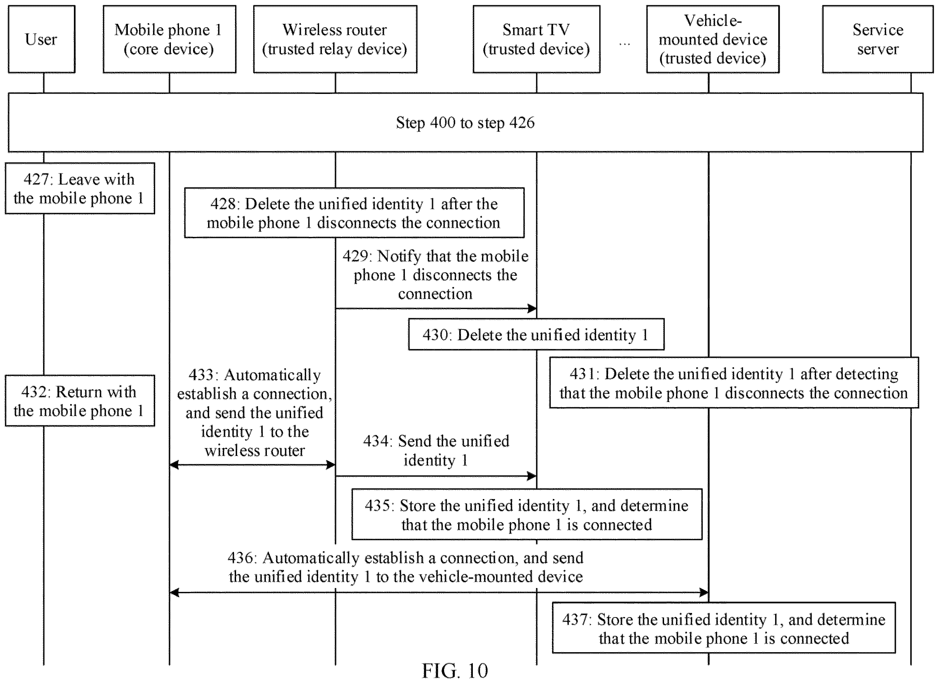

For example, as shown in FIG. 10, the method may further include the following steps.

427: The user leaves with the mobile phone 1.

428: After detecting that the mobile phone 1 disconnects the connection, the wireless router deletes the unified identity 1.

If the mobile phone 1 leaves an effective radiation range of a communications signal of the wireless router, the wireless router detects that the mobile phone 1 disconnects the connection. The wireless router may delete the unified identity 1 corresponding to the mobile phone 1, and may further record a time at which the mobile phone 1 leaves, to determine that the mobile phone 1 and the unified identity 1 are in an off state.

429: The wireless router notifies the smart TV of information indicating that the mobile phone 1 disconnects the connection.

430: The smart TV deletes the unified identity 1.

431: After detecting that the mobile phone 1 disconnects the connection, the vehicle-mounted device deletes the unified identity 1.

If the mobile phone 1 leaves a short-range communication range of the vehicle-mounted device, the vehicle-mounted device detects that the mobile phone 1 disconnects the connection. The vehicle-mounted may delete the unified identity 1 corresponding to the mobile phone 1, and may further record a time at which the mobile phone 1 disconnects the connection, to determine that the mobile phone 1 and the unified identity are in an off state.

Subsequently, after the user returns with the mobile phone 1 used as the core device, the mobile phone 1 may automatically establish a connection to the wireless router based on the previously established trusted connection, and send the unified identity 1 to the wireless router. The wireless router transfers the unified identity 1 to the connected trusted device for storage (or the trusted device resets the unified identity 1 previously set to invalid to valid). After the user returns with the mobile phone 1 used as the core device, the mobile phone 1 may also automatically establish a connection to the trusted device such as the vehicle-mounted device based on the previously established trusted connection, and the mobile phone 1 may send the unified identity 1 to the trusted device for storage (or the trusted device resets the unified identity 1 previously set to invalid to valid).

The following provides descriptions by using an example in which the wireless router and the trusted device delete the unified identity 1 after the mobile phone 1 disconnects the connection, and the wireless router and the trusted device store the unified identity 1 after the mobile phone 1 is connected again.

For example, as shown in FIG. 10, the method may further include the following steps.

432: The user returns with the mobile phone 1.

433: The mobile phone 1 automatically establishes a connection to the wireless router, and sends the unified identity 1 to the wireless router.

When the mobile phone 1 returns to the radiation range of the wireless router, the wireless router may automatically establish a connection to the mobile phone 1.

434: The wireless router sends the unified identity 1 to the smart TV

435: The smart TV stores the unified identity 1, and determines that the mobile phone 1 is connected.

After determining that the mobile phone 1 is connected, the smart TV records that the mobile phone 1 and the unified identity 1 are in a connected state. The smart TV may further record a time at which the mobile phone 1 is connected, that is, store a time of storing the unified identity 1 by the smart TV

436: The mobile phone 1 automatically establishes a connection to the vehicle-mounted device, and sends the unified identity 1 to the vehicle-mounted device.

437: The vehicle-mounted device stores the unified identity 1, and determines that the mobile phone 1 is connected.

When the mobile phone 1 returns to the short-range communication range of the vehicle-mounted device, the vehicle-mounted device may automatically establish a connection to the mobile phone 1. The vehicle-mounted device may store the unified identity 1, determine that the mobile phone 1 and the unified identity 1 are in a connected state, and record a time at which the mobile phone 1 is connected.

In this way, each time after a communication connection to the mobile phone 1 is established, the trusted device and the trusted relay device may store the unified identity 1 generated by the mobile phone 1. Each time after the communication connection to the mobile phone 1 is disconnected, the trusted device and the trusted relay device may automatically delete the unified identity 1.

In embodiments of this application, the trusted device may automatically establish a short-range communication connection to the trusted relay device based on the previously established trusted connection to the trusted relay device. The trusted device may automatically establish a short-range communication connection to the mobile phone 1 based on the previous trusted connection to the mobile phone 1. The mobile phone 1 may automatically transfer the unified identity 1 based on the communication connection between the mobile phone 1 and the trusted relay device. That is, the mobile phone 1 may automatically transfer, based on the topology connection relationship, the unified identity 1 to a surrounding device trusted by the user, and the unified identity 1 may be automatically associated with a plurality of devices of a same user. The mobile phone 1 or the trusted device may add the unified identity 1 when sending the service request to the service server, and the service server may provide cross-device continuous service content and continuous service statuses based on the unified identity 1, that is, different devices may obtain continuous service content and continuous service statuses by using the unified identity 1. In this way, cross-device continuous service content is provided for the user, and continuous service experience of the user is improved.

It can be learned from the foregoing descriptions that, in the solutions described in embodiments of this application, the core device of the user may generate a unified identity, and transfer the unified identity to a surrounding trusted device based on a trusted connection, to identify a same user across devices by using the unified identity. Both the core device and the trusted device add the unified identity when requesting the service content. The service server provides continuous service content and continuous service statuses for different devices based on a same unified identity. In this way, when the user requests services by using different devices, service content and a service status of the user on another device can be automatically synchronized to a current device. After the user switches to a different device, original user experience can be maintained. That is, according to the service processing method provided in embodiments of this application, cross-device continuous service experience of a same user marked by a same unified identity can be implemented.

In addition, according to the service processing method provided in embodiments of this application, a core device, a trusted relay device, and a trusted device of a same user can be automatically associated based on a unified identity, and cross-device continuous service experience of the user can be automatically implemented, without requiring the user to perform account login or switching. This can reduce user operations, and improve user experience.

For a trusted device shared by a plurality of users, the trusted device may automatically provide personalized continuous service content for different users by using a service server based on unified identities separately corresponding to core devices of the users. This improves continuous service experience of the user, without requiring the user to perform a complex operation such as account login or account switching.

Particularly, for a service that does not rely on an account, such as an advertisement, a news information stream, or a browser, according to the service processing method provided in embodiments of this application, user account login is not required, and cross-device continuous service experience of the user can be automatically implemented by using the unified identity.

In some embodiments, the user of the mobile phone 1 may change. For example, after a user A uses the mobile phone 1 for a period of time, the user A gives the mobile phone 1 to a user B for use. In some technical solutions, the mobile phone 1 may determine, based on a preset algorithm model and a change of a use characteristic such as a use habit, a use mode, or a use frequency of the user in a period of time, that the user of the mobile phone 1 changes. In this case, the mobile phone 1 may generate a new unified identity, to identify a new user of the mobile phone 1 after the change. In some other technical solutions, a user 2 may indicate the mobile phone 1 to update the unified identity, and the mobile phone 1 may generate a unified identity 2 used to mark the user 2, to replace the unified identity 1 used to mark the user 1.

In addition, the service processing method provided in embodiments of this application further relates to the following service processing scenarios:
A plurality of core devices are associated with the same user.

In some cases, a same user may have a plurality of core devices, and each core device may generate one unified identity. For example, a same user has a core device mobile phone 1 and a core device mobile phone 2. The mobile phone 1 generates a unified identity 1, and the mobile phone 2 generates a unified identity 2.

In some embodiments, the trusted device may automatically determine, through learning for a period of time based on information such as a rule of connection between core devices, that unified identities of some core devices may be associated with a same user. For example, the trusted device may determine, based on a deletion time and a connection time (that is, a storage time) of each of a plurality of unified identities, whether the plurality of unified identities are associated with a same user.

After the core device is disconnected, the trusted device may delete the unified identity corresponding to the core device. After the core device is connected again, the trusted device may store the unified identity corresponding to the core device. The trusted device may record a time and a storage time of each unified identity, that is, record a disconnection time and a connection time of each core device. A plurality of core devices of a same user are devices carried by the user, and approach and leave with the user. Therefore, if a plurality of unified identities stored in the trusted devices are simultaneously deleted and stored for a plurality of times, it may indicate that the plurality of core devices corresponding to the plurality of unified identities are simultaneously disconnected from and connected to the trusted device. In this case, the plurality of core devices may belong to a same user.

When sending the service request to the service server, the trusted device may add description information. The description information is used to indicate that the unified identities of the plurality of core devices are associated. The service server may determine, based on the description information, that the unified identities of the plurality of core devices are associated with a same user, and perform service processing based on the association relationship between the unified identities.

For example, the description information of the trusted device is used to indicate that the unified identity 1 is associated with the unified identity 2. The service server may determine, based on the description information, that the unified identity 1 and the unified identity 2 are associated with a same user. The service server may combine historical service information corresponding to the unified identity 1 and historical service information corresponding to the unified identity 2. Subsequently, if the service server receives a service request that carries the unified identity 1 or the unified identity 2, the service server may provide service content based on combined historical service information, and update the combined historical service information based on information such as service content or a user event corresponding to the unified identity 1 or the unified identity 2.

In some technical solutions, the service server may store an association relationship between the unified identity 1 and the unified identity 2, and the combined historical service information. For example, for the historical service information corresponding to the unified identity 1 and the historical service information corresponding to the unified identity 2, refer to Table 6. A device corresponding to the unified identity 1 plays advertisements for X6 cars of a brand and X7 cars of a brand, and a device corresponding to the unified identity 2 plays an advertisement for X8 cars of a brand. For the combined historical service information stored in the service server, refer to Table 7. Subsequently, if the service server receives a service request that carries the unified identity 1 or the unified identity 2, the service server may provide service content based on the combined historical service information shown in Table 7.

**Table 6**

| | Unified identity | Historical service information |
|---|---|---|
| Association | Unified identity 1 | Play an advertisement for X6 cars of a brand -> Play an advertisement for X7 cars of a brand... |
| | Unified identity 2 | Play an advertisement for X8 cars of a brand... |

**Table 7**

| | Unified identity | Historical service information |
|---|---|---|
| Association | Unified identity 1 | Play an advertisement for X6 cars of a brand -> Play an advertisement for X7 cars of a brand -> Play an advertisement for X8 cars of a brand... |
| | Unified identity 2 | |

In some other technical solutions, as shown in Table 8, the service server may store the unified identity 1, the unified identity 2, the association relationship between the user 1 marked by the unified identity 1 and that marked by the unified identity 2, and the combined historical service information.

**Table 8**

| | Unified identity | User | Historical service information |
|---|---|---|---|
| Association | Unified identity 1 | User 1 | Play an advertisement for X6 cars of a brand -> Play an advertisement for X7 cars of a brand -> Play an advertisement for X8 cars of a brand... |
| | Unified identity 2 | | |

In some other embodiments, the trusted device may send, to the service server, information such as a deletion time and a connection time (that is, a storage time) corresponding to each of the unified identities corresponding to the plurality of core devices. That is, the trusted device may report connection information such as a connection time and a disconnection time of each of the plurality of core devices to the service server. The service server identifies a rule of connection between the core devices through learning for a period of time based on the connection information such as the connection time and the disconnection time, and automatically determines that super IDs of some core devices are associated with a same user. For example, the service server determines, through learning, that the unified identity 1 and the unified identity 2 are associated with a same user.

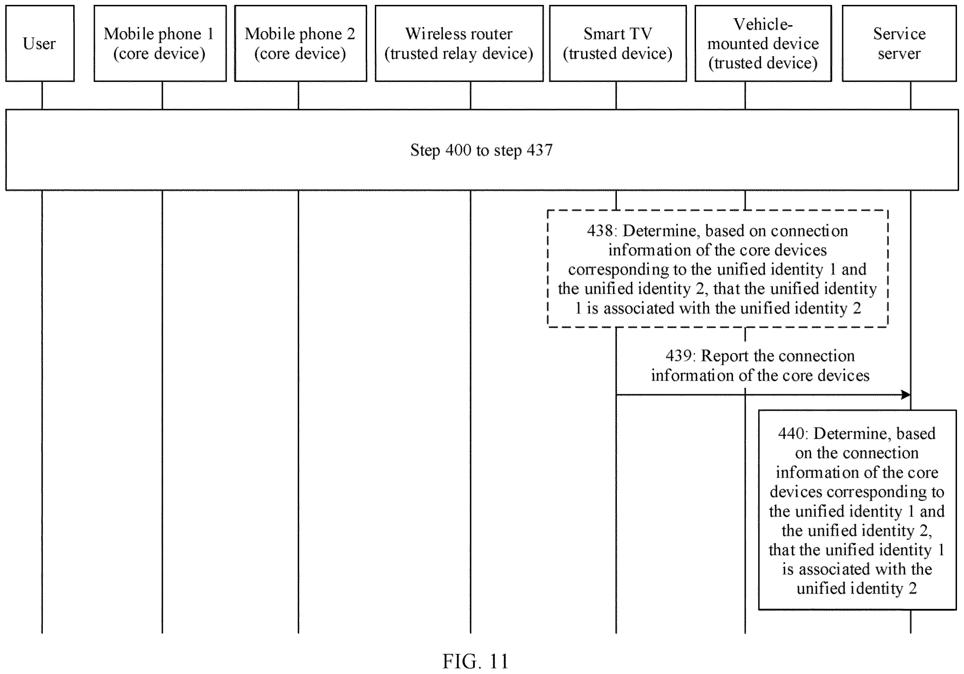

That is, as shown in FIG. 11, the method may further include step 438, or step 439 to step 440.

438: The trusted device determines, based on connection information of the core devices corresponding to the unified identity 1 and the unified identity 2, that the unified identity 1 is associated with the unified identity 2.

439: The trusted device reports the connection information of the core devices to the service server.

440: The service server determines, based on the connection information of the core devices corresponding to the unified identity 1 and the unified identity 2, that the unified identity 1 is associated with the unified identity 2.

In some embodiments of this application, the service server may associate the unified identity 1 and the unified identity 2 as a same unified identity. The service server updates, based on information such as service content or user events corresponding to the unified identity 1 and the unified identity 2, historical service information of a same user associated with the unified identity 1 and the unified identity 2. When receiving a service request that carries the unified identity 1 or the unified identity 2, the service server provides personalized continuous service content for the user based on service content and a service status of the user corresponding to the unified identity 1 and the unified identity 2, to improve continuous service experience of the user.

In some other embodiments, the service server may unify the unified identity 1 and the unified identity 2 into a unified identity X. That is, the service server may update both the unified identity 1 and the unified identity 2 to the unified identity X. The service server updates, based on information such as service content or user events corresponding to the unified identity 1 and the unified identity 2, historical service information of a user associated with the unified identity X. For example, Table 8 may be updated to Table 9.

**Table 9**

| Unified identity | User | Historical service information |
|---|---|---|
| Unified identity X (including the unified identity 1 and the unified identity 2) | User 1 | Play an advertisement for X6 cars of a brand -> Play an advertisement for X7 cars of a brand -> Play an advertisement for X8 cars of a brand... |

In addition, the service server may notify the unified identity X to the mobile phone 1, the mobile phone 2, a trusted device or a trusted relay device connected to the mobile phone 1 or the mobile phone 2, or the like. The mobile phone 1 and the trusted device and the trusted relay device connected to the mobile phone 1 replace the unified identity 1 with the unified identity X. The mobile phone 2 and the trusted device and the trusted relay device connected to the mobile phone 2 replace the unified identity 2 with the unified identity X.

For example, the service server may notify the unified identity X to the mobile phone 1 and the mobile phone 2. The mobile phone 1 updates the unified identity 1 to the unified identity X, and notifies the trusted relay device and the trusted device to update the unified identity 1 to the unified identity X. The mobile phone 2 updates the unified identity 1 to the unified identity X, and notifies the trusted relay device and the trusted device to update the unified identity 2 to the unified identity X.

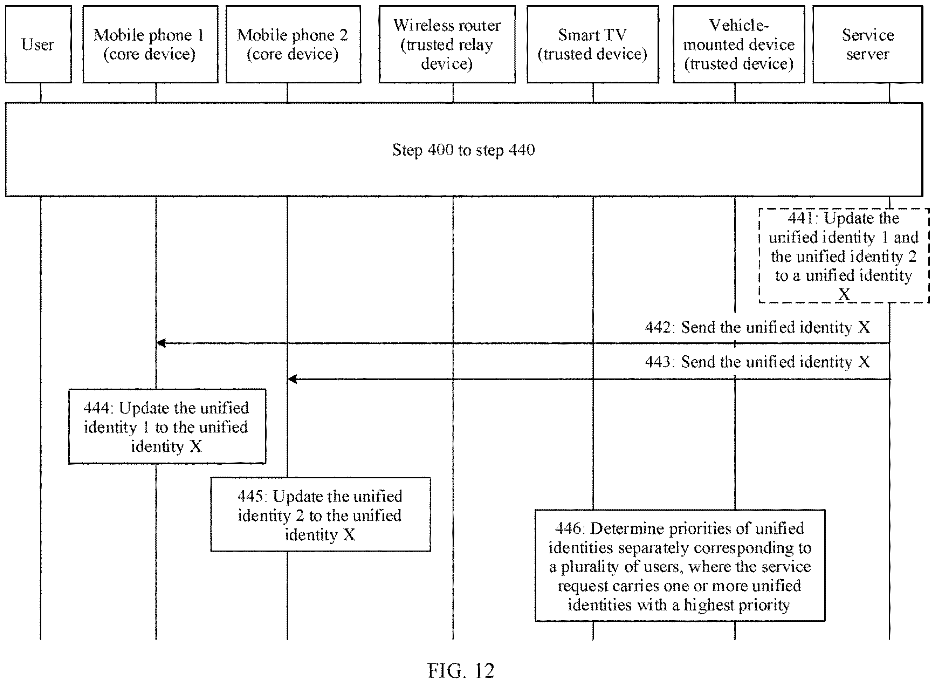

For example, as shown in FIG. 12, the method may further include the following steps:
441: The service server updates the unified identity 1 and the unified identity 2 to the unified identity X.
442: The service server sends the unified identity X to the mobile phone 1 corresponding to the unified identity 1.
443: The service server sends the unified identity X to the mobile phone 2 corresponding to the unified identity 2.
444: The mobile phone 1 updates the unified identity 1 to the unified identity X.
445: The mobile phone 2 updates the unified identity 2 to the unified identity X.

Subsequently, when receiving a service request that carries the unified identity X, the service server provides personalized and precise continuous service content for the user based on service content and a service status of the user corresponding to the unified identity X, to improve continuous service experience of the user. For example, when the trusted device sends, to the service server, the service request that carries the unified identity X, the service server may provide the service content for the trusted device based on the historical service information shown in Table 9.

Core devices of a plurality of users are simultaneously associated with a same trusted device.

For a trusted device such as a vehicle-mounted device or a smart home device shared by a plurality of users, if core devices of different users are connected to the trusted device at different moments, and the core devices of the plurality of users are not simultaneously connected to the trusted device, the trusted device may automatically provide personalized continuous service content for different users based on unified identities corresponding to the users. This improves continuous service experience of the user, without requiring the user to perform a complex operation such as account login or account switching.

If the core devices of the plurality of users are simultaneously connected to the trusted device, the trusted device may identify, based on connection information such as a connection time and a disconnection time, information such as a quantity of core devices currently connected to the trusted device, and a quantity of core devices of users currently connected to the trusted device. The trusted device may sort, according to a preset policy, priorities of unified identities of the plurality of users corresponding to the plurality of core devices currently connected to the trusted device. For example, the trusted device may sort the priorities of the unified identities based on information such as a device type of the trusted device, a current scenario, or connection duration of the core device, that is, sort the priorities of the users marked by the unified identities.

For example, the trusted device is a home smart TV shared by a plurality of users. Core devices of the user 1 include a mobile phone 1 and a mobile phone 2, and the mobile phone 1 and the mobile phone 2 correspond to the unified identity X. A core device of the user 2 includes a mobile phone 3, and the mobile phone 3 corresponds to a unified identity 3. The smart TV is currently connected to the mobile phone 1, the mobile phone 2, and the mobile phone 3. For example, the trusted device identifies that duration of connection between the smart TV and each of the mobile phone 1 and the mobile phone 2 is relatively short, and duration of connection between the mobile phone 3 and the smart TV is relatively long, that is, the user 1 is often not at home, and the user 2 is at home most of the time. In this case, the smart TV may determine that a priority of the unified identity X corresponding to the mobile phone 1 and the mobile phone 2 is higher than a priority of the unified identity 3 corresponding to the mobile phone 3. That is, the smart TV determines that the priority of the user corresponding to the unified identity X is higher than the priority of the user corresponding to the unified identity 3.

For another example, if the trusted device determines that the mobile phone 1 is a device that is connected most recently, and the user of the mobile phone 1 may have just returned home, the trusted device may determine that a priority of the unified identity X corresponding to the mobile phone 1 is higher than that of the unified identity 3, to preferentially provide continuous target services in time for the user who has just returned home.

For another example, if the trusted device determines that the mobile phone 3 is a device that is connected first and continuously, the trusted device determines that a priority of the unified identity 3 corresponding to the mobile phone 3 is higher than that of the unified identity X, to continuously provide continuous target services for the user of the mobile phone 3.

It may be understood that there may be a plurality of policies for determining priorities of a plurality of unified identities by the trusted device. The policy is not limited in embodiments of this application.

That is, as shown in FIG. 12, the method may further include the following step:
446: The trusted device determines priorities of unified identities separately corresponding to a plurality of users, where the service request carries one or more unified identities with a highest priority.

In some embodiments, when there are simultaneously a plurality of unified identities, the trusted device may send the one or more unified identities with a highest priority to the service server when sending the service request to the service server. For example, the smart TV may use the unified identity X with a highest priority as a default unified identity, and when there are simultaneously a plurality of unified identities, the trusted device sends the default unified identity to the service server. The service server provides service content corresponding to the one or more unified identities with a highest priority, so that the smart TV provides continuous service content for one or more users corresponding to the one or more unified identities. This improves continuous service experience of the user.

For example, in a smart home scenario, the user 1 is a young person, and the user 2 is an elderly person at home. The young work during the day and spend less time at home, and the elderly stay at home for a long time. When the young return home from work, mobile phones of the young and the elderly are connected to the smart TV The smart TV and the service server may preferentially provide continuous service content for the young, for example, display advertisements for cars that the young are interested in by using the smart TV During a time period when the young leave home for work, the smart TV and the service server provide continuous service content for the elderly, for example, display advertisements of health care products by using the smart TV

In some other embodiments, when sending the service request to the service server, the trusted device may send unified identities corresponding to a plurality of currently connected core devices to the service server. The service server determines, based on information such as a type of the trusted device, a current scenario, or connection duration of the trusted device, to preferentially provide continuous service content for one or more users corresponding to one or more unified identities. Alternatively, the service server may simultaneously provide continuous service content for users corresponding to various unified identities.

In this way, for a trusted device such as a vehicle-mounted device or a smart home device shared by a plurality of users, the trusted device may automatically provide personalized continuous service content for different users based on unified identities. This improves continuous service experience of the user, without requiring the user to perform a complex operation such as account login or account switching.

A plurality of core devices are separately associated with a plurality of users.

The service processing method provided in embodiments of this application is further applicable to service continuity processing in a scenario of sharing a device by a plurality of users. It can be learned from the foregoing descriptions that the trusted device or the service server may unify a plurality of unified identities of a same user into a same unified identity. The trusted device or the service server may further sort the plurality of unified identities of the user. In this way, for a scenario of sharing a device by a plurality of users in which a plurality of core devices are separately associated with a plurality of users, the trusted device or the service server may unify a plurality of core devices and a plurality of unified identities of a same user, and preferentially provide service content for one or more users with a highest priority, or may simultaneously provide continuous service content for users corresponding to various unified identities. This improves continuous service experience of the user.

For example, core devices of the user 1 include a mobile phone 1 and a mobile phone 2, the mobile phone 1 corresponds to a unified identity 1, and the mobile phone 2 corresponds to a unified identity 2. For example, core devices of the user 2 include a mobile phone 3 and a mobile phone 4, the mobile phone 3 corresponds to a unified identity 3, and the mobile phone 4 corresponds to a unified identity 4. The trusted device is a home smart TV shared by a plurality of users. The smart TV may determine, based on connection information such as a connection time and a disconnection time of a core device, the mobile phone 1, the mobile phone 2, the mobile phone 3, and the mobile phone 4 that currently correspond to the unified identity 1, the unified identity 2, the unified identity 3, and the unified identity 4 respectively. The smart TV may further determine, based on connection information such as a connection time and a disconnection time of a core device, that core devices corresponding to the unified identity 1 and the unified identity 2 belong to a same user, and that the unified identity 1 and the unified identity 2 may be unified into a unified identity X. The smart TV may further determine, based on connection information such as a connection time and a disconnection time of a core device, that core devices corresponding to the unified identity 3 and the unified identity 4 belong to a same user, and that the unified identity 3 and the unified identity 4 may be unified into a unified identity Y The smart TV may determine that two users corresponding to the unified identity X and the unified identity Y are currently using the smart TV

The smart TV may further determine, according to a preset policy, that a priority of the unified identity X is higher than that of the unified identity Y Therefore, the smart TV may preferentially provide continuous service content for the user corresponding to the unified identity X.

It should be noted that, the example in which a plurality of core devices are separately associated with a plurality of users is used for description by using an example in which the trusted device performs combination and priority sorting on unified identities. Alternatively, the service server may perform combination and priority sorting on unified identities. Details are not described herein.

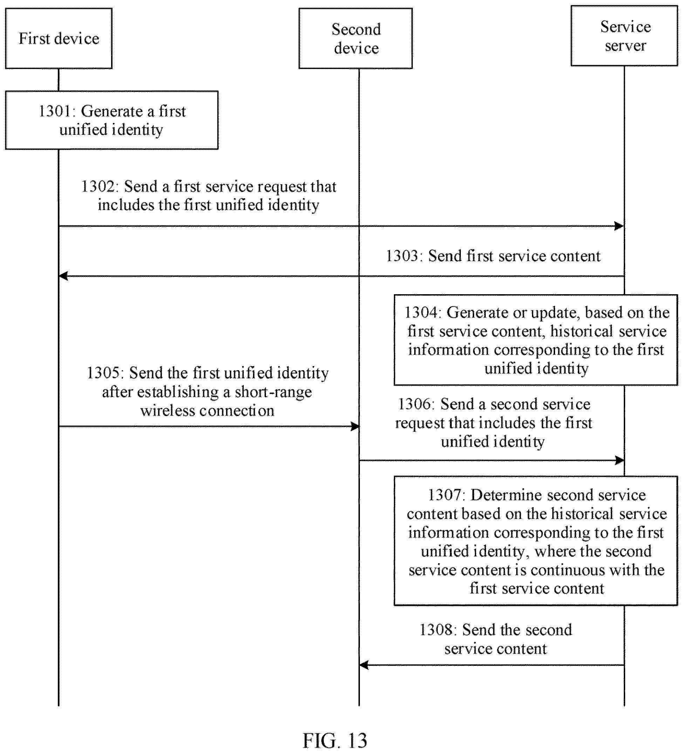

With reference to the descriptions in the foregoing embodiment, embodiments of this application provide a service processing method, applicable to a service processing system. The service processing system may include a first device, a second device, and a service server. As shown in FIG. 13, the method may include the following steps.

1301: The first device generates a first unified identity.

For example, the first device may be a core device, for example, may be the mobile phone 1 in the foregoing embodiment, and the first unified identity may be the unified identity 1 in the foregoing embodiment.

1302: The first device sends a first service request to the service server, where the first service request is used to obtain first service content of a target service, and the first service request includes the first unified identity.

For example, the target service may be an advertisement service.

1303: The service server sends the first service content to the first device.

For example, the first service content may be advertisement content for X6 cars of a brand.

1304: The service server generates or updates, based on the first service content, historical service information corresponding to the first unified identity.

The historical service information is used to describe a history of using the service by a user. The historical service information may include information such as a historical service status and/or a user preference of the user. For details about the historical service information, refer to related descriptions in the foregoing embodiment.

1305: The first device sends the first unified identity to the second device after establishing a short-range wireless connection to the second device.

For example, the short-range wireless connection may be a Wi-Fi connection or a Bluetooth connection.

1306: The second device sends a second service request to the service server, where the second service request is used to obtain second service content of the target service, and the second service request includes the first unified identity.

1307: The service server determines the second service content based on the historical service information corresponding to the first unified identity, where the second service content is continuous with the first service content.

That the second service content is continuous with the first service content may include: The first service content is the same as, continuous with, close to, or associated with the second service content, or both the first service content and the second service content are content that the user is interested in.

1308: The service server sends the second service content to the second device.

In this solution, the first device may generate the first unified identity. The first unified identity may be used to request the first service content of the target service from the service server, and the first service content is used to generate or update the historical service information corresponding to the first unified identity. The first device may further send the first unified identity to the second device that has the short-range communication connection to the first device. The second device may request the second service content of the target service from the service server based on the first unified identity. The second service content is determined based on the historical service information corresponding to the first unified identity, and the second service content is continuous with the first service content.

That is, a short-range wireless connection may be established between a group of devices such as the first device and the second device used by a same user, and a unified identity may be transferred based on a short-range wireless connection between devices, so that the group of devices used by the same user can be associated by using the unified identity. Therefore, the service server may provide cross-device continuous service content for the same user based on historical service information corresponding to the unified identity, to improve cross-device continuous service experience of the user. This solution does not rely on a user account, without requiring the user to perform user account login or switching. This can reduce user operations, and improve user experience.

It may be understood that, to implement the foregoing functions, the electronic device includes corresponding hardware and/or a software module for performing each function. Algorithm steps in examples described with reference to embodiments disclosed in this specification can be implemented in a form of hardware or a combination of hardware and computer software in this application. Whether a function is performed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

In embodiments of this application, function modules in the electronic device may be defined based on the foregoing method examples. For example, each function module may be defined in a correspondence to each function, or two or more functions may be integrated into one processing module. The integrated module may be implemented in a form of hardware. It should be noted that, in embodiments of this application, division into the modules is an example and is merely logical function division, and there may be other division manners during actual implementation.

An embodiment of this application provides an electronic device. The electronic device may be the foregoing core device, trusted relay device, trusted device, or service server. The electronic device includes one or more processors and one or more memories. The one or more memories are coupled to the one or more processors. The one or more memories are configured to store computer program code, and the computer program code includes computer instructions. When the one or more processors execute the computer instructions, the electronic device is enabled to perform the foregoing related method steps, to implement the service processing method in the foregoing embodiment.

An embodiment of this application further provides a computer-readable storage medium. The computer-readable storage medium stores computer instructions. When the computer instructions are run on an electronic device, the electronic device is enabled to perform the foregoing related method steps, to implement the service processing method in the foregoing embodiment. The electronic device may be the foregoing core device, trusted relay device, trusted device, or service server.

An embodiment of this application further provides a computer program product. When the computer program product is run on a computer, the computer is enabled to perform the foregoing related steps, to implement the service processing method performed by the electronic device in the foregoing embodiment. The electronic device may be the foregoing core device, trusted relay device, trusted device, or service server.

In addition, an embodiment of this application further provides an apparatus. The apparatus may be specifically a chip, a component, or a module. The apparatus may include a processor and a memory that are connected. The memory is configured to store computer-executable instructions. When the apparatus runs, the processor may execute the computer-executable instructions stored in the memory, so that the chip performs the service processing method performed by the electronic device in the foregoing method embodiment. The electronic device may be the foregoing core device, trusted relay device, trusted device, or service server.

The electronic device, the computer-readable storage medium, the computer program product, or the chip provided in embodiments of this application is configured to perform the corresponding method provided above. Therefore, for beneficial effects that can be achieved, refer to the beneficial effects of the corresponding method provided above. Details are not described herein.

Another embodiment of this application provides a service processing system. The service processing system may include the foregoing core device, trusted relay device, trusted device, and service server. The service processing system may be configured to implement the service processing method provided in the foregoing embodiment.

The foregoing descriptions about implementations allow a person skilled in the art to understand that, for the purpose of convenient and brief description, division of the foregoing functional modules is taken as an example for illustration. In actual application, the foregoing functions can be allocated to different modules and implemented according to a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiments are merely examples. For example, division of the modules or units is merely logical function division, and there may be other division manners during actual implementation. For example, a plurality of units or components may be combined or may be integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in an electrical form, a mechanical form, or another form.

The units described as separate components may or may not be physically separate, and components displayed as units may be one or more physical units, that is, may be located in one place, or may be distributed on a plurality of different places. Some or all of the units may be selected based on actual requirements to achieve the objectives of the solutions of embodiments of this application.

In addition, function units in embodiments of this application may be integrated into one processing unit, each of the units may exist alone physically, or two or more units may be integrated into one unit. The integrated unit may be implemented in a form of hardware, or may be implemented in a form of a software function unit.

When the integrated unit is implemented in the form of a software function unit and sold or used as an independent product, the integrated unit may be stored in a readable storage medium. Based on such an understanding, the technical solutions of this application essentially, or the part contributing to the conventional technology, or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in the embodiments of this application. The foregoing storage medium includes: any medium that can store program code, such as a USB flash drive, a removable hard disk, a read-only memory (read only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art in the technical scope disclosed in this application shall fall within the protection scope of this application. Therefore, the protection scope of this application shall be subject to the protection scope of the claims.

## Claims

1. A service processing method, comprising:
generating (1301), by a first device, a first unified identity, wherein the first unified identity is used by the first device to request first service content of a target service from a service server, and the first service content is used to generate or update historical service information (1304) corresponding to the first unified identity; and
sending (1305), by the first device, the first unified identity to a second device after establishing a short-range wireless connection to the second device, wherein the first unified identity is further used by the second device to request (1306) second service content of the target service from the service server, the second service content is determined based on the historical service information (1307) corresponding to the first unified identity, and the second service content is continuous with the first service content.

2. The method according to claim 1, wherein the first device establishes the short-range wireless connection to the second device by using a third device, and the sending, by the first device, the first unified identity to a second device comprises:
sending, by the first device to the second device, the first unified identity forwarded by the third device

3. The method according to claim 1 or 2, wherein after the generating, by a first device, a first unified identity, the method further comprises:
sending, by the first device, a first service request to the service server, wherein the first service request is used to obtain the first service content of the target service, and the first service request comprises the first unified identity and
receiving, by the first device, the first service content from the service server

4. The method according to claim 3, wherein after the sending, by the first device, a first service request to the service server, the method further comprises:
sending, by the first device, an event reporting request to the service server after detecting a user event corresponding to the target service, wherein the event reporting request comprises the user event and the first unified identity.

5. The method according to any one of claims 1 to 4, wherein the generating, by a first device, a first unified identity comprises:
generating, by the first device, the first unified identity after establishing a short-range wireless connection to the second device or the third device for the first time.

6. The method according to any one of claims 1 to 5, wherein after the generating, by a first device, a first unified identity, the method further comprises:
receiving, by the first device, identity update information from the service server, wherein the identity update information comprises a third unified identity; and
updating, by the first device, the first unified identity to the third unified identity, wherein the third unified identity is generated based on the first unified identity and a second unified identity, and the second unified identity is generated by a fourth device

7. The method according to claim 6, wherein after the updating, by the first device, the first unified identity to the third unified identity, the method further comprises:
sending, by the first device, the third unified identity to the second device

8. A service processing method, comprising:
receiving (1305), by a second device, a first unified identity from a first device after establishing a short-range wireless connection to the first device, wherein the first unified identity is generated (1301) by the first device, the first unified identity is used by the first device to request first service content of a target service from a service server, and the first service content is used to generate or update historical service information (1304) corresponding to the first unified identity;
sending (1306), by the second device, a second service request to the service server, wherein the second service request is used to obtain second service content of the target service, and the second service request comprises the first unified identity; and
receiving (1308), by the second device, the second service content from the service server, wherein the second service content is determined based on the historical service information corresponding to the first unified identity, and the second service content is continuous with the first service content.

9. The method according to claim 8, wherein the second device establishes the short-range wireless connection to the first device by using a third device, and the receiving, by a second device, a first unified identity from a first device comprises:
receiving, by the second device from the first device, the first unified identity forwarded by the third device

10. The method according to claim 8 or 9, wherein after the receiving, by the second device, the second service content from the service server, the method further comprises:
sending, by the second device, an event reporting request to the service server after detecting a user event corresponding to the target service, wherein the event reporting request comprises the user event and the first unified identity.

11. The method according to any one of claims 8 to 10, wherein after the sending, by the second device, a second service request to the service server, the method further comprises:
receiving, by the second device, status synchronization information from the service server, wherein the status synchronization information is determined based on the historical service information corresponding to the first unified identity; and
synchronizing, by the second device, a latest service status and a historical service record in the historical service information corresponding to the first unified identity to the second device based on the status synchronization information

12. The method according to any one of claims 8 to 11, wherein after the receiving, by a second device, a first unified identity from a first device, the method further comprises:
storing, by the second device, the first unified identity;
determining, by the second device, to disconnect the short-range wireless connection to the first device; and
deleting, by the second device, the first unified identity.

13. The method according to claim 12, wherein the second device establishes the short-range wireless connection to the first device by using the third device, and the determining, by the second device, to disconnect the short-range wireless connection to the first device comprises:
receiving, by the second device, first notification information from the third device, wherein the first notification information is used to indicate the first device to disconnect the connection

14. An electronic device, comprising one or more processors and a memory, wherein the memory stores code; and
when the code is executed by the electronic device, the electronic device is enabled to perform the service processing method performed by the first device according to any one of claims 1 to 7 or claim 8-13.

15. A computer-readable storage medium, comprising computer instructions, wherein when the computer instructions are run on a computer, the computer is enabled to perform the service processing method performed by the first device according to any one of claims 1 to 7 or claim 8-13.

## Patentansprüche

1. Dienstverarbeitungsverfahren, das umfasst:
Erzeugen (1301), durch eine erste Vorrichtung, einer ersten vereinheitlichten Identität, wobei die erste vereinheitlichte Identität durch die erste Vorrichtung verwendet wird, um einen ersten Dienstinhalt eines Zieldienstes von einem Dienstserver anzufordern, und der erste Dienstinhalt verwendet wird, um historische Dienstinformationen (1304), die der ersten vereinheitlichten Identität entsprechen, zu erzeugen oder zu aktualisieren; und
Senden (1305), durch die erste Vorrichtung, der ersten vereinheitlichten Identität an eine zweite Vorrichtung, nach einem Herstellen einer drahtlosen Nahbereichsverbindung mit der zweiten Vorrichtung, wobei die erste vereinheitlichte Identität ferner durch die zweite Vorrichtung verwendet wird, um einen zweiten Dienstinhalt des Zieldienstes von dem Dienstserver anzufordern (1306), wobei der zweite Dienstinhalt basierend auf den historischen Dienstinformationen (1307), die der ersten vereinheitlichten Identität entsprechen, bestimmt wird, und wobei der zweite Dienstinhalt mit dem ersten Dienstinhalt fortlaufend ist.

2. Verfahren nach Anspruch 1, wobei die erste Vorrichtung die drahtlose Nahbereichsverbindung mit der zweiten Vorrichtung durch Verwenden einer dritten Vorrichtung herstellt, und das Senden, durch die erste Vorrichtung, der ersten vereinheitlichten Identität an eine zweite Vorrichtung umfasst:
Senden, durch die erste Vorrichtung an die zweite Vorrichtung, der ersten vereinheitlichten Identität, die durch die dritte Vorrichtung weitergeleitet wird.

3. Verfahren nach Anspruch 1 oder 2, wobei nach dem Erzeugen, durch die erste Vorrichtung, einer ersten vereinheitlichten Identität, das Verfahren ferner umfasst:
Senden, durch die erste Vorrichtung, einer ersten Dienstanforderung an den Dienstserver, wobei die erste Dienstanforderung verwendet wird, um den ersten Dienstinhalt des Zieldienstes zu erhalten, und die erste Dienstanforderung die erste vereinheitlichte Identität umfasst; und
Empfangen, durch die erste Vorrichtung, des ersten Dienstinhaltes von dem Dienstserver.

4. Verfahren nach Anspruch 3, wobei nach dem Senden, durch die erste Vorrichtung, einer ersten Dienstanforderung an den Dienstserver, das Verfahren ferner umfasst: Senden, durch die erste Vorrichtung, einer Ereignismeldeanforderung an den Dienstserver nach einem Erkennen eines Benutzerereignisses, das dem Zieldienst entspricht, wobei die Ereignismeldeanforderung das Benutzerereignis und die erste vereinheitlichte Identität umfasst.

5. Verfahren nach einem der Ansprüche 1 bis 4, wobei das Erzeugen, durch eine erste Vorrichtung, einer ersten vereinheitlichten Identität umfasst:
Erzeugen, durch die erste Vorrichtung, der ersten vereinheitlichten Identität, nach dem Herstellen einer drahtlosen Nahbereichsverbindung mit der zweiten Vorrichtung oder der dritten Vorrichtung zum ersten Mal.

6. Verfahren nach einem der Ansprüche 1 bis 5, wobei nach dem Erzeugen, durch eine erste Vorrichtung, einer ersten vereinheitlichten Identität, das Verfahren ferner umfasst:
Empfangen, durch die erste Vorrichtung, von Identitätsaktualisierungsinformationen von dem Dienstserver, wobei die Identitätsaktualisierungsinformationen eine dritte vereinheitlichte Identität umfassen; und
Aktualisieren, durch die erste Vorrichtung, der ersten vereinheitlichten Identität auf die dritte vereinheitlichte Identität, wobei die dritte vereinheitlichte Identität basierend auf der ersten vereinheitlichten Identität und einer zweiten vereinheitlichten Identität erzeugt wird, und die zweite vereinheitlichte Identität durch eine vierte Vorrichtung erzeugt wird.

7. Verfahren nach Anspruch 6, wobei nach dem Aktualisieren, durch die erste Vorrichtung, der ersten vereinheitlichten Identität auf die dritte vereinheitlichte Identität, das Verfahren ferner umfasst:
Senden, durch die erste Vorrichtung, der dritten vereinheitlichten Identität an die zweite Vorrichtung.

8. Dienstverarbeitungsverfahren, das umfasst:
Empfangen (1305), durch eine zweite Vorrichtung, einer ersten vereinheitlichten Identität von einer ersten Vorrichtung, nach dem Herstellen einer drahtlosen Nahbereichsverbindung mit der ersten Vorrichtung, wobei die erste vereinheitlichte Identität durch die erste Vorrichtung erzeugt (1301) wird, die erste vereinheitlichte Identität durch die erste Vorrichtung verwendet wird, um den ersten Dienstinhalt eines Zieldienstes von einem Dienstserver anzufordern, und der erste Dienstinhalt verwendet wird, um historische Dienstinformationen (1304), die der ersten vereinheitlichten Identität entsprechen, zu erzeugen oder zu aktualisieren;
Senden (1306), durch die zweite Vorrichtung, einer zweiten Dienstanforderung an den Dienstserver, wobei die zweite Dienstanforderung verwendet wird, um den zweiten Dienstinhalt des Zieldienstes zu erhalten, und die zweite Dienstanforderung die zweite vereinheitlichte Identität umfasst; und
Empfangen (1308), durch die zweite Vorrichtung, des zweiten Dienstinhaltes von dem Dienstserver, wobei der zweite Dienstinhalt basierend auf den historischen Dienstinformationen, die der ersten vereinheitlichten Identität entsprechen, bestimmt wird, und der zweite Dienstinhalt mit dem ersten Dienstinhalt fortlaufend ist.

9. Verfahren nach Anspruch 8, wobei die zweite Vorrichtung die drahtlose Nahbereichsverbindung mit der ersten Vorrichtung durch Verwenden einer dritten Vorrichtung herstellt, und das Empfangen, durch eine zweite Vorrichtung, einer ersten vereinheitlichten Identität von einer ersten Vorrichtung umfasst:
Empfangen, durch die zweite Vorrichtung von der erste Vorrichtung, der ersten vereinheitlichten Identität, die durch die dritte Vorrichtung weitergeleitet wird.

10. Verfahren nach Anspruch 8 oder 9, wobei nach dem Empfangen, durch die zweite Vorrichtung, des zweiten Dienstinhaltes von dem Dienstserver, das Verfahren ferner umfasst:
Senden, durch die zweite Vorrichtung, einer Ereignismeldeanforderung an den Dienstserver nach dem Erkennen eines Benutzerereignisses, das dem Zieldienst entspricht, wobei die Ereignismeldeanforderung das Benutzerereignis und die erste vereinheitlichte Identität umfasst.

11. Verfahren nach einem der Ansprüche 8 bis 10, wobei nach dem Senden, durch die zweite Vorrichtung, einer zweiten Dienstanforderung an den Dienstserver, das Verfahren ferner umfasst:
Empfangen, durch die zweite Vorrichtung, von Statussynchronisationsinformationen von dem Dienstserver, wobei die Statussynchronisationsinformationen basierend auf den historischen Dienstinformationen, die der ersten vereinheitlichten Identität entsprechen, bestimmt werden; und
Synchronisieren, durch die zweite Vorrichtung, eines neuesten Dienststatus und eines historischen Dienstdatensatzes in den historischen Dienstinformationen, die der ersten vereinheitlichten Identität entsprechen, mit der zweiten Vorrichtung basierend auf den Statussynchronisationsinformationen.

12. Verfahren nach einem der Ansprüche 8 bis 11, wobei nach dem Empfangen, durch eine zweite Vorrichtung, einer ersten vereinheitlichten Identität von einer ersten Vorrichtung, das Verfahren ferner umfasst:
Speichern, durch die zweite Vorrichtung, der ersten vereinheitlichten Identität;
Bestimmen, durch die zweite Vorrichtung, die drahtlose Nahbereichsverbindung mit der ersten Vorrichtung zu trennen; und
Löschen, durch die zweite Vorrichtung, der ersten vereinheitlichten Identität.

13. Verfahren nach Anspruch 12, wobei die zweite Vorrichtung die drahtlose Nahbereichsverbindung mit der ersten Vorrichtung durch Verwenden der dritten Vorrichtung herstellt, und das Bestimmen, durch die zweite Vorrichtung, die drahtlose Nahbereichsverbindung mit der ersten Vorrichtung zu trennen, umfasst:
Empfangen, durch die zweite Vorrichtung, von ersten Benachrichtigungsinformationen von der dritten Vorrichtung, wobei die ersten Benachrichtigungsinformationen verwendet werden, um der ersten Vorrichtung anzugeben, die Verbindung zu trennen.

14. Elektronische Vorrichtung, die einen oder mehrere Prozessoren und einen Speicher umfasst, wobei der Speicher Code speichert; und
wenn der Code durch die elektronische Vorrichtung ausgeführt wird, die elektronische Vorrichtung aktiviert wird, um das Dienstverarbeitungsverfahren, das durch die erste Vorrichtung nach einem der Ansprüche 1 bis 7 oder 8 bis 13 durchgeführt wird, durchzuführen.

15. Computerlesbares Speichermedium, das Computeranweisungen umfasst, wobei, wenn die Computeranweisungen auf einem Computer laufen gelassen werden, der Computer aktiviert wird, um das Dienstverarbeitungsverfahren, das durch die erste Vorrichtung nach einem der Ansprüche 1 bis 7 oder 8 bis 13 durchgeführt wird, durchzuführen.

## Revendications

1. Procédé de traitement de service, comprenant :
la génération (1301), par un premier dispositif, d'une première identité unifiée, dans lequel la première identité unifiée est utilisée par le premier dispositif pour demander un premier contenu de service d'un service cible à un serveur de service, et le premier contenu de service est utilisé pour générer ou mettre à jour des informations de service historique (1304) correspondant à la première identité unifiée ; et
l'envoi (1305), par le premier dispositif, de la première identité unifiée à un deuxième dispositif après établissement d'une connexion sans fil à courte portée avec le deuxième dispositif, dans lequel la première identité unifiée est en outre utilisée par le deuxième dispositif pour demander (1306) un second contenu de service du service cible au serveur de service, le second contenu de service est déterminé sur la base des informations de service historique (1307) correspondant à la première identité unifiée, et le second contenu de service s'inscrit dans la continuité du premier contenu de service.

2. Procédé selon la revendication 1, dans lequel le premier dispositif établit la connexion sans fil à courte portée avec le deuxième dispositif à l'aide d'un troisième dispositif, et l'envoi, par le premier dispositif, de la première identité unifiée à un deuxième dispositif comprend :
l'envoi, par le premier dispositif au deuxième dispositif, de la première identité unifiée transférée par le troisième dispositif.

3. Procédé selon la revendication 1 ou 2, dans lequel, après la génération, par un premier dispositif, d'une première identité unifiée, le procédé comprend en outre :
l'envoi, par le premier dispositif, d'une première demande de service au serveur de service, dans lequel la première demande de service est utilisée pour obtenir le premier contenu de service du service cible, et la première demande de service comprend la première identité unifiée ; et
la réception, par le premier dispositif, du premier contenu de service en provenance du serveur de service.

4. Procédé selon la revendication 3, dans lequel après l'envoi, par le premier dispositif, d'une première demande de service au serveur de service, le procédé comprend en outre :
l'envoi, par le premier dispositif, d'une demande de rapport d'événement au serveur de service après détection d'un événement utilisateur correspondant au service cible, dans lequel la demande de rapport d'événement comprend l'événement utilisateur et la première identité unifiée.

5. Procédé selon l'une quelconque des revendications 1 à 4, dans lequel la génération, par un premier dispositif, d'une première identité unifiée comprend :
la génération, par le premier dispositif, de la première identité unifiée après établissement d'une connexion sans fil à courte portée avec le deuxième dispositif ou le troisième dispositif pour la première fois.

6. Procédé selon l'une quelconque des revendications 1 à 5, dans lequel, après la génération, par un premier dispositif, d'une première identité unifiée, le procédé comprend en outre :
la réception, par le premier dispositif, d'informations de mise à jour d'identité en provenance du serveur de service, dans lequel les informations de mise à jour d'identité comprennent une troisième identité unifiée ; et
la mise à jour, par le premier dispositif, de la première identité unifiée vers la troisième identité unifiée, dans lequel la troisième identité unifiée est générée sur la base de la première identité unifiée et d'une deuxième identité unifiée, et la deuxième identité unifiée est générée par un quatrième dispositif.

7. Procédé selon la revendication 6, dans lequel, après la mise à jour, par le premier dispositif, de la première identité unifiée vers la troisième identité unifiée, le procédé comprend en outre :
l'envoi, par le premier dispositif, de la troisième identité unifiée au deuxième dispositif.

8. Procédé de traitement de service, comprenant :
la réception (1305), par un deuxième dispositif, d'une première identité unifiée en provenance d'un premier dispositif après établissement d'une connexion sans fil à courte portée avec le premier dispositif, dans lequel la première identité unifiée est générée (1301) par le premier dispositif, la première identité unifiée est utilisée par le premier dispositif pour demander un premier contenu de service d'un service cible à un serveur de service, et le premier contenu de service est utilisé pour générer ou mettre à jour des informations de service historique (1304) correspondant à la première identité unifiée ;
l'envoi (1306), par le deuxième dispositif, d'une seconde demande de service au serveur de service, dans lequel la seconde demande de service est utilisée pour obtenir un second contenu de service du service cible, et la seconde demande de service comprend la première identité unifiée ; et
la réception (1308), par le deuxième dispositif, du second contenu de service en provenance du serveur de service, dans lequel le second contenu de service est déterminé sur la base des informations de service historique correspondant à la première identité unifiée, et le second contenu de service s'inscrit dans la continuité du premier contenu de service.

9. Procédé selon la revendication 8, dans lequel le deuxième dispositif établit la connexion sans fil à courte portée avec le premier dispositif à l'aide d'un troisième dispositif, et la réception, par un deuxième dispositif, d'une première identité unifiée en provenance d'un premier dispositif comprend :
la réception, par le deuxième dispositif, en provenance du premier dispositif, de la première identité unifiée transférée par le troisième dispositif.

10. Procédé selon la revendication 8 ou 9, dans lequel après la réception, par le deuxième dispositif, du second contenu de service en provenance du serveur de service, le procédé comprend en outre :
l'envoi, par le deuxième dispositif, d'une demande de rapport d'événement au serveur de service après détection d'un événement utilisateur correspondant au service cible, dans lequel la demande de rapport d'événement comprend l'événement utilisateur et la première identité unifiée.

11. Procédé selon l'une quelconque des revendications 8 à 10, dans lequel, après l'envoi, par le deuxième dispositif, d'une seconde demande de service au serveur de service, le procédé comprend en outre :
la réception, par le deuxième dispositif, d'informations de synchronisation d'état en provenance du serveur de service, dans lequel les informations de synchronisation d'état sont déterminées sur la base des informations de service historique correspondant à la première identité unifiée ; et
la synchronisation, par le deuxième dispositif, d'un dernier état de service et d'un registre de service historique dans les informations de service historique correspondant à la première identité unifiée vers le deuxième dispositif sur la base des informations de synchronisation d'état.

12. Procédé selon l'une quelconque des revendications 8 à 11, dans lequel, après la réception, par un deuxième dispositif, d'une première identité unifiée en provenance d'un premier dispositif, le procédé comprend en outre :
le stockage, par le deuxième dispositif, de la première identité unifiée ;
le fait de déterminer, par le deuxième dispositif, de déconnecter la connexion sans fil à courte portée du premier dispositif ; et
la suppression, par le deuxième dispositif, de la première identité unifiée.

13. Procédé selon la revendication 12, dans lequel le deuxième dispositif établit la connexion sans fil à courte portée avec le premier dispositif à l'aide du troisième dispositif, et le fait de déterminer, par le deuxième dispositif, de déconnecter la connexion sans fil à courte portée du premier dispositif comprend :
la réception, par le deuxième dispositif, de premières informations de notification en provenance du troisième dispositif, dans lequel les premières informations de notification sont utilisées pour indiquer au premier dispositif qu'il doit déconnecter la connexion.

14. Dispositif électronique comprenant un ou plusieurs processeurs et une mémoire, dans lequel la mémoire stocke un code ; et
lorsque le code est exécuté par le dispositif électronique, le dispositif électronique est en mesure de réaliser le procédé de traitement de service réalisé par le premier dispositif selon l'une quelconque des revendications 1 à 7 ou 8 à 13.

15. Support de stockage lisible par ordinateur, comprenant des instructions d'ordinateur, dans lequel, lorsque les instructions d'ordinateur sont exécutées sur un ordinateur, l'ordinateur est en mesure de réaliser le procédé de traitement de service réalisé par le premier dispositif selon l'une quelconque des revendications 1 à 7 ou 8 à 13.
